(19) Europäisches Patentamt / European Patent Office / Office européen des brevets

(11) **EP 4 564 061 A1**

(12) **EUROPEAN PATENT APPLICATION**
published in accordance with Art. 153(4) EPC

(43) Date of publication:
**04.06.2025 Bulletin 2025/23**

(21) Application number: **23909649.8**

(22) Date of filing: **02.11.2023**

(51) International Patent Classification (IPC):
**G01S 19/49** *(2010.01)*  **G01C 21/16** *(2006.01)*

(52) Cooperative Patent Classification (CPC):
**G01C 21/165;** G01S 19/49

(86) International application number:
**PCT/CN2023/129424**

(87) International publication number:
**WO 2024/139716 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022  CN 202211677820**

(71) Applicant: **Tencent Technology (Shenzhen)
Company Limited
Shenzhen, Guangdong 518057 (CN)**

(72) Inventor: **XIAO, Ning
Shenzhen, Guangdong 518057 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **DATA PROCESSING METHOD AND APPARATUS, AND DEVICE, COMPUTER-READABLE STORAGE MEDIUM AND COMPUTER PROGRAM PRODUCT**

(57)    This application provides a data processing method and apparatus, an electronic device, and a computer-readable storage medium. The method is applied to the map field, and the method includes: obtaining satellite positioning information; obtaining a sensor data set captured by a target sensor in a terminal, the sensor data set including at least an acceleration sensor data set and a gyroscope data set; determining, based on the acceleration sensor data set and the gyroscope data set, yaw angle variation information of a carrier in which the terminal is located during movement; and fusing the satellite positioning information and the yaw angle variation information to obtain moving trajectory information of the carrier.

EP 4 564 061 A1

Obtain satellite positioning information — 101

Obtain a sensor data set captured by a target sensor in a terminal — 102

Determine, based on an acceleration sensor data set and a gyroscope data set, yaw angle variation information of a carrier in which the terminal is located during movement of the carrier — 103

Fuse the satellite positioning information and the yaw angle variation information to obtain moving trajectory information of the carrier — 104

**FIG. 3A**

**Description**

CROSS-REFERENCE TO RELATED APPLICATION(S)

This application claims priority to Chinese Patent Application No. 202211677820.5 filed on December 26, 2022, which is incorporated herein by reference in its entirety.

TECHNICAL FIELD

This application relates to the field of data processing technologies, and in particular, to a data processing method and apparatus, a device, a computer-readable storage medium, and a computer program product.

BACKGROUND

A conventional vehicle navigation application generally performs positioning for a user or a carrier only based on a global navigation satellite system (GNSS) anchor point of a terminal as an observation input. In some scenarios, such as under an elevated highway, at an intersection or a fork, or at a low speed, for example, the anchor point may drift or jump or be discontinuous. Consequently, the anchor point may freeze, turning may be unsmooth, and false yawing may be triggered, which seriously affects accuracy of path planning.

SUMMARY

Embodiments of this application provide a data processing method and apparatus, a device, a computer-readable storage medium, and a computer program product, which is capable of improving accuracy of a positioning trajectory.

Technical solutions in embodiments of this application are implemented as follows.

Embodiments of this application provide a data processing method, executable by an electronic device, the method including:

obtaining satellite-based positioning information;

obtaining a sensor data set captured by a target sensor in a terminal, the sensor data set including at least an acceleration sensor data set and a gyroscope data set;

determining, based on the acceleration sensor data set and the gyroscope data set, yaw angle variation information of a carrier in which the terminal is located during movement of the carrier; and

fusing the satellite-based positioning information and the yaw angle variation information to obtain moving trajectory information of the carrier.

Embodiments of this application provide a data processing apparatus, including:

a first obtaining module, configured to obtain satellite-based positioning information;

a second obtaining module, configured to obtain a sensor data set captured by a target sensor in a terminal, the sensor data set including at least an acceleration sensor data set and a gyroscope data set;

a first determining module, configured to determine, based on the acceleration sensor data set and the gyroscope data set, yaw angle variation information of a carrier in which the terminal is located during movement of the carrier; and

a first fusion module, configured to fuse the satellite-based positioning information and the yaw angle variation information to obtain moving trajectory information of the carrier.

Embodiments of this application provide an electronic device. The electronic device includes:

a memory, configured to store computer-executable instructions; and

a processor, configured to implement the data processing method provided in embodiments of this application when executing the computer-executable instructions stored in the memory.

Embodiments of this application provide a computer-readable storage medium, having computer-executable instructions stored therein for implementing the data processing method provided in embodiments of this application when being executed by a processor.

Embodiments of this application provide a computer program product, including a computer program or computer-executable instructions, the data processing method provided in embodiments of this application being implemented when the computer program or the computer-executable instructions are executed by a processor.

Embodiments of this application have the following beneficial effects.

After satellite positioning information of a terminal is obtained, a sensor data set captured by a target sensor in the terminal is obtained, the sensor data set including at least an acceleration sensor data set and a gyroscope data set. Yaw angle variation information of a carrier in which the terminal is located during movement of the carrier is determined based on the acceleration sensor data set and the gyroscope data set. Then the satellite positioning information and the yaw angle variation information are fused to obtain moving trajectory information of the carrier. To be specific, in embodiments of this application, the sensor data set of the terminal is incorporated into an observation dimension, and the yaw angle variation information determined by using the sensor data set is fused with the satellite positioning information. In this way, actual trajectory information of the carrier carrying the terminal can be more accurately determined by using the yaw angle variation information in a case that the satellite positioning information is missing or satellite positioning quality is poor. This improves accuracy of a moving trajectory.

BRIEF DESCRIPTION OF THE DRAWINGS

FIG. 1 is a schematic structural diagram of an architecture of a data processing system according to an embodiment of this application.

FIG. 2 is a schematic structural diagram of an apparatus according to an embodiment of this application.

FIG. 3A is a schematic flowchart of a data processing method according to an embodiment of this application.

FIG. 3B is a schematic diagram of an implementation process of determining yaw angle variation information according to an embodiment of this application.

FIG. 3C is a schematic diagram of an implementation process of determining yaw angle variation information of a carrier based on a conversion matrix and first gyroscope data according to an embodiment of this application.

FIG. 4A is a schematic diagram of an implementation process of determining moving trajectory information of a carrier according to an embodiment of this application.

FIG. 4B is a schematic diagram of an implementation process of determining first target trajectory point data according to an embodiment of this application.

FIG. 4C is a schematic diagram of an implementation process of determining offset information between an $i^{th}$ target trajectory point and an $(i-1)^{th}$ target trajectory point according to an embodiment of this application.

FIG. 5A is a schematic diagram of an implementation process of determining $i^{th}$ target trajectory point data according to an embodiment of this application.

FIG. 5B is another schematic implementation flowchart of a data processing method according to an embodiment of this application.

FIG. 6 is a schematic structural diagram of composition of a data processing system according to an embodiment of this application.

FIG. 7 is a schematic diagram of a vehicle attitude angle according to an embodiment of this application.

FIG. 8 is a schematic diagram of reading of an accelerometer according to an embodiment of this application.

FIG. 9 is a schematic diagram of a scenario in which a data processing method provided in embodiments of this application is applied under an elevated highway.

FIG. 10 is a schematic diagram of a scenario in which a data processing method provided in embodiments of this application is applied at an intersection.

DETAILED DESCRIPTION

To make the objectives, technical solutions, and advantages of this application clearer, the following describes this application in further detail with reference to the accompanying drawings. The described embodiments are not to be considered as a limitation to this application. All other embodiments obtained by a person of ordinary skill in the art without creative efforts shall fall within the protection scope of this application.

In the following descriptions, the term "some embodiments" describes subsets of all possible embodiments, but it can be understood that "some embodiments" may be the same subset or different subsets of all the possible embodiments, and can be combined with each other without conflict.

In the following descriptions, the terms "first", "second", and "third" are merely intended to distinguish between similar objects rather than describe a specific order of objects. It can be understood that the "first", "second", and "third" are interchangeable in order in proper circumstances, so that embodiments of this application described herein can be implemented in an order other than the order illustrated or described herein.

Unless otherwise defined, meanings of all technical and scientific terms used in this specification are the same as those usually understood by a person skilled in the art to which this application belongs. The terms used in this specification are merely intended to describe the objectives of embodiments of this application, but are not intended to limit this application.

Before embodiments of this application are further described in detail, terms in embodiments of this application are described, and the following explanations are applicable to the terms in embodiments of this application.

(1) A GNSS is a space-based radio navigation and positioning system capable of providing a user with all-weather three-dimensional coordinates and velocity and time information at any place on the Earth's surface or in terrestrial space. The GNSS includes one or more satellite constellations and an augmentation system required for supporting particular work.

(2) A circular error probable (CEP) is a probability of falling within a circle that is drawn with a target as a center and with a radius of r, and is usually denoted as CEPXX, XX being a number indicating a probability. For example, a CEP95 of positioning accuracy being 5 m means that, a probability that an actual anchor point falls within a circle with a given anchor point as a center and with a radius of 5 m is 95%.

(3) A micro-electro-mechanical system (MEMS) is a micro-device or a micro-system that can integrate a micro-mechanism, a micro-sensor, a micro-actuator, a signal processing and control circuit, an interface, communication, and a power supply.

Embodiments of this application provide a data processing method and apparatus, a device, a computer-readable storage medium, and a computer program product, to resolve a problem in the related art that positioning is inaccurate when carrier positioning is performed based only on a GNSS anchor point of a mobile phone. The following describes exemplary application of an electronic device provided in embodiments of this application. The device provided in embodiments of this application may be implemented as various types of user terminals, for example, a notebook computer, a tablet computer, a desktop computer, a set-top box, or a mobile device (for example, a mobile phone, a portable music player, a personal digital assistant, a dedicated messaging device, a portable gaming device, or an in-vehicle device), or may be implemented as a server. The following describes exemplary application in a case that the device is implemented as a terminal.

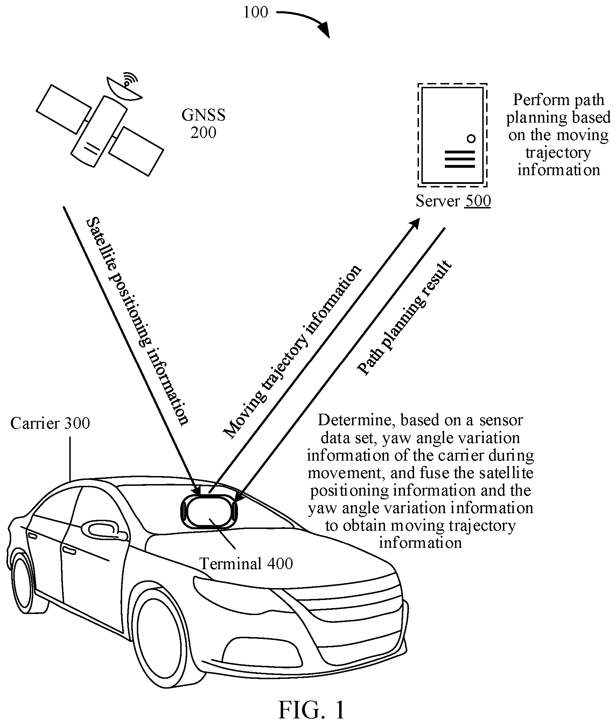

FIG. 1 is a schematic architectural diagram of a data processing system 100 according to an embodiment of this application. As shown in FIG. 1, the data processing system includes a GNSS 200, a carrier 300, a terminal 400, and a server 500. The terminal 400 is placed in the carrier 300. The terminal 400 and the GNSS 200 are connected through a network (not shown in FIG. 1). The network may be a wide area network, a local area network, or a combination of the two.

When the terminal 400 is used for path planning or navigation, the terminal 400 first obtains its own satellite positioning information and a sensor data set captured by its own target sensor, the sensor data set including at least an acceleration sensor data set and a gyroscope data set; determines, based on the acceleration sensor data set and the gyroscope data set, yaw angle variation information of the carrier 300 in which the terminal is located during movement; and finally, fuses the satellite positioning information and the yaw angle variation information to obtain moving trajectory information of the carrier. The terminal 400 transmits the moving trajectory information of the carrier to the server 500. The server 500 performs path planning based on the moving trajectory information of the carrier and destination information to obtain a path planning result. The server 500 transmits the path planning result to the terminal 400. The terminal 400 displays the path planning result.

During the path planning, the server 500 uses the moving trajectory information that is obtained by fusing the satellite positioning information and the yaw angle variation information. The moving trajectory information can effectively combine absolute positioning accuracy of the GNSS and local relative positioning accuracy of the sensor, and therefore has higher accuracy. This can improve accuracy of the path planning and avoid yawing or mis-navigation.

In some embodiments, the server 500 may be an independent physical server, or may be a server cluster or a distributed system that includes a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal 400 may be a smartphone, a tablet computer, a notebook computer, a desktop computer, a smart speaker, a smartwatch, an in-vehicle terminal, or the like, but is not limited thereto. The terminal and the server may be directly or indirectly connected through wired or wireless communication. This is not limited in embodiments of this application.

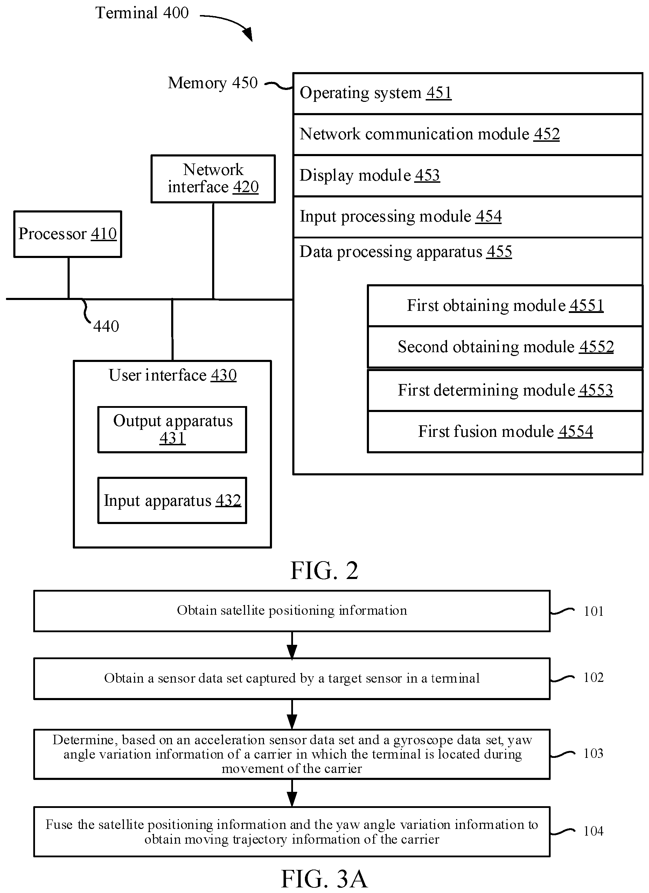

FIG. 2 is a schematic structural diagram of a terminal 400 according to an embodiment of this application. The terminal 400 shown in FIG. 2 includes at least one processor 410, a memory 450, at least one network interface 420, and a user interface 430. The components of the terminal 400 are coupled together through a bus system 440. The bus system 440 is configured to implement connection and communication between the components. In addition to a data bus, the bus system 440 further includes a power bus, a control bus, and a state signal bus. However, for ease of clear description, all types of buses in FIG. 2 are marked as the bus system 440.

The processor 410 may be an integrated circuit chip with a signal processing capability, for example, a general-purpose processor, a digital signal processor (DSP), another programmable logic device, a discrete gate or transistor logic device, or a discrete hardware component. The general-purpose processor may be a microprocessor, any conventional processor, or the like.

The user interface 430 includes one or more output apparatuses 431 capable of displaying media content, including one or more speakers and/or one or more visual display screens. The user interface 430 further includes one or more input apparatuses 432, including user interface components for facilitating user input, for example, a keyboard, a mouse, a microphone, a touch display screen, a camera, or another input button or control.

The memory 450 may be a removable memory, a non-removable memory, or a combination thereof. Exemplary hardware devices include a solid-state memory, a hard disk drive, an optical disc drive, and the like. In some embodiments, the memory 450 includes one or more storage devices physically located away from the processor 410.

The memory 450 includes a volatile memory or a non-volatile memory, or may include both a volatile memory and a non-volatile memory. The non-volatile memory may be a read-only memory (ROM). The volatile memory may be a random access memory (RAM). The memory 450 described in this embodiment of this application is intended to include any suitable type of memory.

In some embodiments, the memory 450 is capable of storing data to support various operations. Examples of the data include a program, a module, and a data structure or a subset or superset thereof. Examples are described below:

an operating system 451, including system programs for processing various basic system services and performing hardware-related tasks, for example, a framework layer, a core library layer, and a driver layer for implementing various basic services and processing hardware-based tasks;

a network communication module 452, configured to reach another electronic device through one or more (wired or wireless) network interfaces 420, exemplary network interfaces 420 including Bluetooth, wireless fidelity (Wi-Fi), universal serial bus (USB), and the like;

a display module 453, configured to display information by using one or more output apparatuses 431 (for example, a display screen or a speaker) associated with the user interface 430 (for example, a user interface for operating a peripheral device and displaying content and information); and

an input processing module 454, configured to detect one or more user inputs or interactions from one or more input apparatuses 432 and translate the detected inputs or interactions.

In some embodiments, an apparatus provided in embodiments of this application may be implemented by using software. FIG. 2 shows a data processing apparatus 455 stored in the memory 450. The apparatus may be software in the form of a program or a plug-in, and includes the following software modules: a first obtaining module 4551, a second obtaining module 4552, a first determining module 4553, and a first fusion module 4554. These modules are logical modules, and therefore may be flexibly combined or further split based on an implemented function. Functions of the modules are described below.

In some other embodiments, the apparatus provided in embodiments of this application may be implemented by using hardware. In an example, the apparatus provided in embodiments of this application may be a processor in the form of a hardware decoding processor, and is programmed to perform the data processing method provided in embodiments of this application. For example, the processor in the form of the hardware decoding processor may be one or more application-specific integrated circuits (ASICs), DSPs, programmable logic devices (PLDs), complex programmable logic devices (CPLDs), field programmable gate arrays (FPGAs), or other electronic elements.

In some embodiments, the terminal or the server may alternatively implement the data processing method provided in embodiments of this application by running a computer program. For example, the computer program may be a native program or software module in an operating system. The computer program may be a native application (APP), to be specific, a program that needs to be installed in an operating system to run, for example, a map APP; or may be a mini program, to be specific, a program that only needs to be downloaded to a browser environment to run; or may be a mini program that can be embedded in any APP. To sum up, the computer program may be an application, a module, or a plug-in in any form.

The data processing method provided in embodiments of this application is described with reference to the exemplary application and implementation of the terminal provided in embodiments of this application.

The following describes the data processing method provided in embodiments of this application. As described above, the electronic device for implementing the data processing method in embodiments of this application may be a user terminal placed in a carrier, an edge computing device in a carrier, or a combination of the two. Therefore, an execution entity of each operation is not repeatedly described below.

FIG. 3A is a schematic flowchart of a data processing method according to an embodiment of this application. The method is described with reference to operations shown in FIG. 3A.

Operation 101: Obtain satellite positioning information.

Herein, the satellite positioning information is also called the satellite-based positioning information or the satellite-provided positioning information.

In some embodiments, the obtained satellite positioning information can represent a position and a moving speed of a carrier. The carrier may be a car, an electric bicycle, a motorcycle, a drone, or the like. The satellite positioning information may be satellite positioning information of an intelligent terminal placed in the carrier, satellite positioning information of a navigation device that comes with the carrier, or satellite positioning information of a positioning module with a positioning function in the carrier.

The satellite positioning information includes at least position information and velocity information of the carrier in which the terminal is located. In some embodiments, the satellite positioning information further includes an accuracy estimate. The position information may include longitude data and latitude data. The velocity information may include a rate and a direction. The direction in the velocity information may be represented by a value within [0, 360). For example, 0° indicates a due north direction, 45° indicates a northeast direction, 90° indicates a due east direction, 180° indicates a due south direction, and 270° indicates a due west direction.

The accuracy estimate in the satellite positioning information is configured for representing a difference between the position information in the satellite positioning information and a real position of the carrier. In some embodiments, the accuracy estimate in the satellite positioning information may be obtained by performing prediction by using a trained accuracy estimation model based on a quantity of satellites, satellite mass, historical trajectory information, and other data.

In some embodiments, the satellite positioning information may be obtained at a first frequency. For example, the first frequency may be 1 Hz or 2 Hz.

When the data processing method provided in embodiments of this application is implemented by an intelligent terminal placed in a carrier and the satellite positioning information is satellite positioning information of the intelligent terminal, operation 101 may be implemented as follows: The intelligent terminal obtains satellite positioning information transmitted by a GNSS. When the data processing method provided in embodiments of this application is implemented by an intelligent terminal placed in a carrier and the satellite positioning information is satellite positioning information of the carrier, operation 101 may be implemented as follows: The intelligent terminal receives satellite positioning information of a positioning module in the carrier or a navigation device in the carrier. When the data processing method provided in embodiments of this application is implemented by an edge computing device in a carrier and the satellite positioning information is satellite positioning information of an intelligent terminal, data communication may be performed between the edge computing device and the intelligent terminal, between the intelligent terminal and a positioning device of the carrier, between the intelligent terminal and a navigation device of the carrier, between the edge computing device and the positioning device of the carrier, and between the edge computing device and the navigation device of the carrier through a network (for example, an in-vehicle local area network or a wireless network) or a short-range communication technology. The edge computing device receives the satellite positioning information of the intelligent terminal. When the data processing method provided in embodiments of this application is implemented by an edge computing device in a carrier and the satellite positioning information is satellite positioning information of the carrier, operation 101 is implemented as follows: The edge computing device receives satellite positioning information of a positioning module of the carrier or a navigation device of the carrier.

Operation 102: Obtain a sensor data set captured by a target sensor in the terminal.

The terminal may be an intelligent user terminal placed in the carrier, for example, a mobile phone or a tablet computer, or may be an in-vehicle terminal that comes with the carrier. The target sensor includes at least an acceleration sensor and a gyroscope. In some embodiments, the target sensor may further include a magnetic sensor. Correspondingly, the sensor data set includes at least an acceleration sensor data set and a gyroscope data set. In some embodiments, the sensor data set may further include a magnetic sensor data set. Herein, the sensor data in these sensor data sets are measured during movement of the carrier.

In some embodiments, readings in the target sensor may be captured at regular intervals, and captured timestamps and captured sensor readings may be added to the sensor data set. The acceleration sensor data set includes a plurality of capture timestamps and corresponding acceleration sensor reading values. The gyroscope data set includes a plurality of timestamps and corresponding gyroscope reading values.

Operation 103: Determine, based on the acceleration sensor data set and the gyroscope data set, yaw angle variation information of the carrier in which the terminal is located during movement of the carrier.

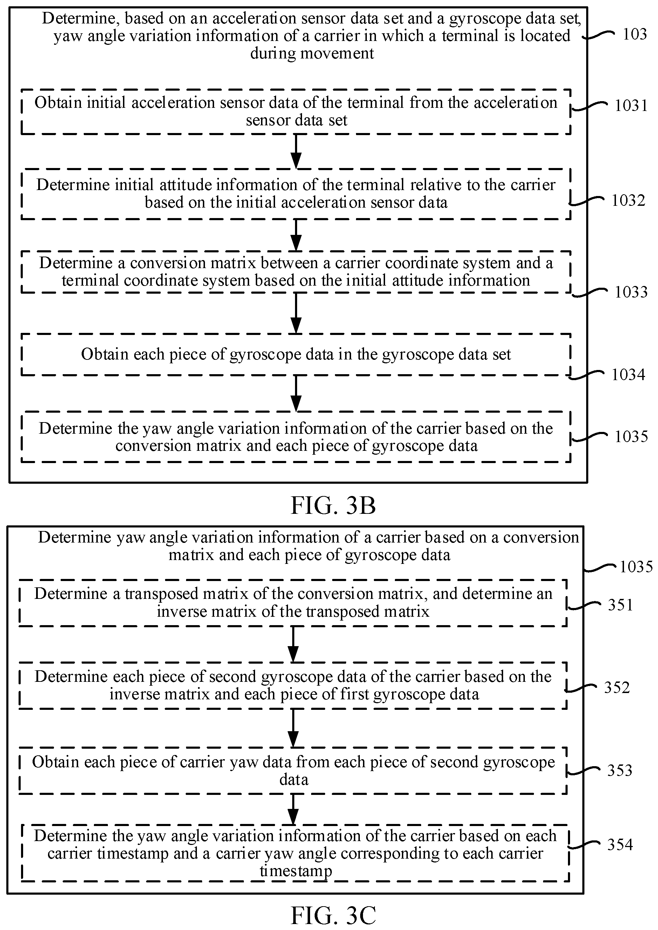

In some embodiments, the carrier in which the terminal is located may be a car, an electric bicycle, a motorcycle, a drone, or the like. As shown in FIG. 3B, operation 103 shown in FIG. 3A may be implemented by the following operation 1031 to operation 1035. Details are described below.

Operation 1031: Obtain initial acceleration sensor data of the terminal from the acceleration sensor data set.

Because the acceleration sensor data set includes a plurality of pieces of acceleration sensor data, the initial acceleration sensor data is acceleration sensor data that is in the acceleration sensor data set and whose capture timestamp has a longest time interval from a current moment. The initial acceleration sensor data includes initial X-axis acceleration sensor data, initial Y-axis acceleration sensor data, and initial Z-axis acceleration sensor data.

Operation 1032: Determine initial attitude information of the terminal relative to the carrier based on the initial acceleration sensor data.

In some embodiments, the initial attitude information includes an initial pitch angle, an initial roll angle, and an initial heading angle. Because a vector sum obtained based on the acceleration sensor is a gravity acceleration g, a formula (1-1) may be obtained through calculation:

$$\begin{bmatrix} a_x \\ a_y \\ a_z \end{bmatrix} = \begin{bmatrix} -g * \cos(x_0) * \sin(y_0) \\ g \sin(x_0) \\ g * \cos(x_0) * \cos(y_0) \end{bmatrix} \qquad (1\text{-}1),$$

where

$a_x$ is the initial X-axis acceleration sensor data, $a_y$ is the initial Y-axis acceleration sensor data, $a_z$ is the initial Z-axis acceleration sensor data, $x_0$ is the initial pitch angle, $y_0$ is the initial roll angle, $g$ is the gravity acceleration, and

$$|g| = \sqrt[2]{a_x^2 + a_y^2 + a_z^2} .$$

Based on the formula (1-1), operation 1032 may be implemented as follows: The initial pitch angle of the terminal relative to the carrier is determined based on the initial X-axis acceleration sensor data, the initial Y-axis acceleration sensor data, and the initial Z-axis acceleration sensor data, and the initial roll angle of the terminal relative to the carrier is determined based on the initial X-axis acceleration sensor data and the initial Z-axis acceleration sensor data.

To be specific, the initial pitch angle may be obtained based on a formula (1-2):

$$x_0 = arcsin \frac{a_y}{\sqrt[2]{a_x^2 + a_y^2 + a_z^2}} \qquad (1\text{-}2);$$

and
the initial roll angle may be obtained based on a formula (1-3):

$$y_0 = arctan \frac{-a_x}{a_z} \tag{1-3}.$$

In this embodiment of this application, the yaw angle variation information, namely, a difference between heading angles at two adjacent moments, of the carrier needs to be calculated. Therefore, regardless of a value of an initial yaw angle, the obtained yaw angle variation information is consistent. Therefore, to reduce calculation complexity, an operation of calculating the initial yaw angle may be omitted, and a preset initial yaw angle of the terminal relative to the carrier is directly obtained. This can improve data processing efficiency while ensuring processing accuracy. Finally, the initial pitch angle, the initial roll angle, and the initial yaw angle are determined as the initial attitude information.

Operation 1033: Determine a conversion matrix between a carrier coordinate system and a terminal coordinate system based on the initial attitude information.

In some embodiments, first, a first rotation matrix corresponding to an X-axis is determined based on the initial pitch angle, a second rotation matrix corresponding to a Y-axis is determined based on the initial roll angle, and a third rotation matrix corresponding to a Z axis is determined based on the initial yaw angle. A product of the third rotation matrix, the second rotation matrix, and the first rotation matrix is determined as the conversion matrix between the carrier coordinate system and the terminal coordinate system.

The first rotation matrix $R_x$ may be obtained based on a formula (1-4):

$$R_x = \begin{bmatrix} 1 & 0 & 0 \\ 0 & \cos(x_0) & -\sin(x_0) \\ 0 & \sin(x_0) & \cos(x_0) \end{bmatrix} \tag{1-4},$$

where
$x_0$ is the initial pitch angle, sin() is a sine function, and cos() is a cosine function.

The second rotation matrix $R_y$ may be obtained based on a formula (1-5):

$$R_y = \begin{bmatrix} \cos(y_0) & 0 & \sin(y_0) \\ 0 & 1 & 0 \\ -\sin(y_0) & 0 & \cos(y_0) \end{bmatrix} \tag{1-5},$$

where
$y_0$ is the initial roll angle.

The third rotation matrix $R_z$ may be obtained based on a formula (1-6):

$$R_z = \begin{bmatrix} \cos(z_0) & -\sin(z_0) & 0 \\ \sin(z_0) & \cos(z_0) & 0 \\ 0 & 0 & 1 \end{bmatrix} \tag{1-6},$$

where
$z_0$ is the initial yaw angle.

The conversion matrix between the carrier coordinate system and the terminal coordinate system may be obtained based on a formula (1-7):

$$C_v^c = R_z * R_y * R_x \tag{1-7},$$

where $C_v^c$ is the conversion matrix between the carrier coordinate system and the terminal coordinate system.

Operation 1034: Obtain each piece of first gyroscope data in the gyroscope data set.

In this embodiment of this application, each piece of first gyroscope data in the gyroscope data set may be obtained at a second frequency. The second frequency may be 10 Hz, 20 Hz, or the like. The first frequency is less than the second frequency. This can ensure that a plurality of pieces of first gyroscope data are captured between two adjacent satellite timestamps, and further ensure that a plurality of pieces of yaw angle variation data exist between two adjacent satellite timestamps and a plurality of target trajectory points are included between two pieces of satellite positioning data, to avoid freezing and unsmoothness caused by insufficient GNSS positioning accuracy.

Operation 1035: Determine the yaw angle variation information of the carrier based on the conversion matrix and each piece of first gyroscope data.

In some embodiments, as shown in FIG. 3C, operation 1035 in FIG. 3B may be implemented by operation 351 to operation 354 shown in FIG. 3C. The operations are described below with reference to FIG. 3C.

Operation 351: Determine a transposed matrix of the conversion matrix, and determine an inverse matrix of the transposed matrix.

The conversion matrix has $3\times3$ dimensions. In some embodiments, the conversion matrix is first transposed to obtain the transposed matrix of the conversion matrix, and then the inverse matrix of the transposed matrix of the conversion matrix may be determined by using an adjoint matrix method or elementary row (column) transformation. The inverse matrix also has $3\times3$ dimensions.

Operation 352: Determine each piece of second gyroscope data of the carrier based on the inverse matrix and each piece of first gyroscope data.

In some embodiments, each piece of first gyroscope data of the terminal includes each timestamp at which first gyroscope data is captured and a gyroscope reading value corresponding to each timestamp. Each gyroscope reading value includes three values. The three values may constitute a $3\times1$ column vector corresponding to the first gyroscope data. Operation 352 may be implemented as follows: A product of the inverse matrix and a column vector corresponding to each piece of first gyroscope data is determined as a gyroscope value of the carrier. The gyroscopic value of the carrier includes three-axis gyroscope rotation angles ($gyr'_x$, $gyr'_y$, $gyr'_z$) in the carrier coordinate system. The gyroscope value of the carrier and a carrier timestamp corresponding to the gyroscope reading value are determined as the second gyroscope data of the carrier.

Operation 353: Obtain each piece of carrier yaw data from each piece of second gyroscope data.

In some embodiments, each carrier timestamp in each piece of second gyroscope data of the carrier and a Z-axis rotation angle $gyr'_z$, namely, a carrier yaw angle, corresponding to each carrier timestamp are obtained. The carrier yaw data includes each carrier timestamp and a carrier yaw angle corresponding to each carrier timestamp.

Operation 354: Determine the yaw angle variation information of the carrier based on each carrier timestamp and the carrier yaw angle corresponding to each carrier timestamp.

In some embodiments, it is assumed that carrier timestamps are $t_1$, $t_2$, $t_3$, ..., carrier yaw angles respectively

$$gyr'_{z1}, gyr'_{z2}, gyr'_{z2}$$

corresponding to the carrier timestamps are ... , and the carrier yaw angle variation information includes the carrier timestamps and yaw angle variation angles respectively corresponding to the carrier timestamps. A yaw angle variation angle corresponding to a carrier timestamp $t_k$ is a difference between a carrier yaw angle correspond-

$$gyr'_{zk} - gyr'_{z(k-1)}$$

ing to $t_k$ and a carrier yaw angle corresponding to $t_{k-1}$: . The yaw angle variation angle may be a positive number or a negative number.

In operation 1031 to operation 1035, the initial attitude information of the terminal relative to the carrier in which the terminal is located may be determined based on the condition that the vector sum of three-dimensional X-axis, Y-axis, and Z-axis accelerations of the acceleration sensor is the gravity acceleration. Then the conversion matrix between the terminal coordinate system and the carrier coordinate system is determined based on the initial attitude information. Then a carrier yaw angle is determined based on the conversion matrix and a reading of the gyroscope in the terminal, and a yaw angle variation angle of the carrier is determined, to provide a necessary data basis for subsequently determining a moving trajectory of the carrier.

Still refer to FIG. 3A. Operations after operation 103 are described.

Operation 104: Fuse the satellite positioning information and the yaw angle variation information to obtain moving trajectory information of the carrier.

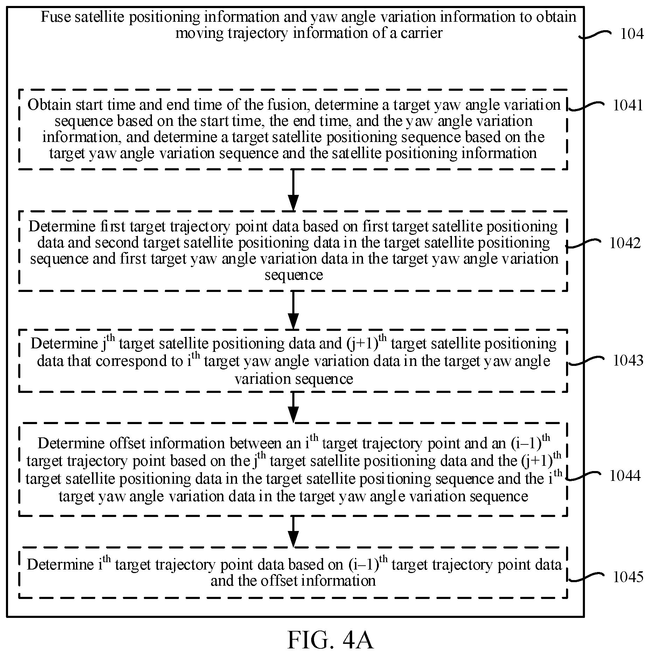

In some embodiments, as shown in FIG. 4A, operation 104 shown in FIG. 3A may be implemented by operation 1041 to operation 1045 shown in FIG. 4A. The operations are described below with reference to FIG. 4A.

Operation 1041: Obtain start time and end time of the fusion, determine a target yaw angle variation sequence based on the start time, the end time, and the yaw angle variation information, and determine a target satellite positioning sequence based on the target yaw angle variation sequence and the satellite positioning information.

The data processing method provided in embodiments of this application may be used as an additional function of an electronic map application. A prompt for enabling the function may be given during navigation when it is determined that satellite signal quality is poor, or the function is set to remain enabled during navigation, and the function is disabled after the navigation ends. In some embodiments, enabling time and disabling time of the function may alternatively be set manually. Therefore, when it is determined, during navigation, that the function corresponding to the data processing method is enabled, enabling time is determined as the start time of the fusion, and disabling time of the function is determined as the end time. If no disabling time of the function is preset, a currently latest timestamp may be determined as the end time.

In some embodiments, the determining a target yaw angle variation sequence based on the start time, the end time, and the yaw angle variation information may be implemented as follows: A first target carrier timestamp with a shortest time interval from the start time is determined from the yaw angle variation information, a second target carrier timestamp with a shortest time interval from the end time is determined, and yaw angle variation data between the first target carrier timestamp and the second target carrier timestamp is determined as the target yaw angle variation sequence. During the determining of the target satellite positioning sequence, a first target satellite timestamp that is earlier than the first target carrier timestamp and that has a shortest time interval from the first target carrier timestamp is determined from the satellite positioning information, and satellite positioning data corresponding to second target satellite timestamp(s) that is later than the first target satellite timestamp and earlier than the end time is determined as the target satellite positioning sequence.

Operation 1042: Determine first target trajectory point data based on first target satellite positioning data and second target satellite positioning data in the target satellite positioning sequence and first target yaw angle variation data in the target yaw angle variation sequence.

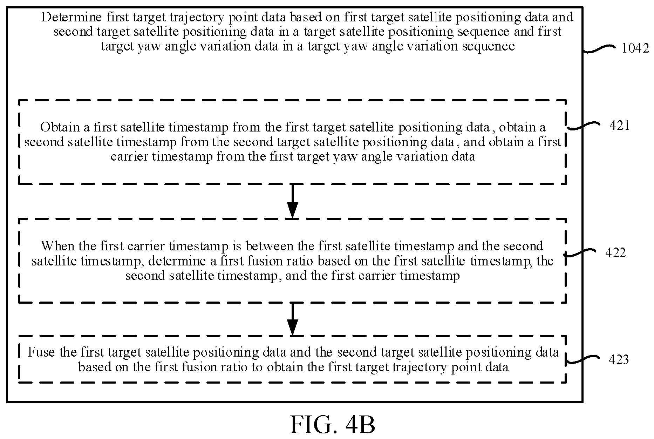

In some embodiments, as shown in FIG. 4B, operation 1042 shown in FIG. 4A may be implemented by operation 421 to operation 423 shown in FIG. 4B. The operations are described below with reference to FIG. 4B.

Operation 421: Obtain a first satellite timestamp from the first target satellite positioning data, obtain a second satellite timestamp from the second target satellite positioning data, and obtain a first carrier timestamp from the first target yaw angle variation data.

In embodiments of this application, satellite positioning data is a four-tuple, including a satellite timestamp, position information, velocity information, and an accuracy estimate. The position information includes a longitude and a latitude. The velocity information includes a rate and a direction. The accuracy estimate may be represented by a CEP. Yaw angle variation data is a two-tuple, including a carrier timestamp and a yaw angle variation. After the first target satellite positioning data and the second target satellite positioning data are obtained, the first satellite timestamp and the second satellite timestamp may be obtained correspondingly. Similarly, the first carrier timestamp may be obtained from the first target yaw angle variation data.

Operation 422: When the first carrier timestamp is between the first satellite timestamp and the second satellite timestamp, determine a first fusion ratio based on the first satellite timestamp, the second satellite timestamp, and the first carrier timestamp.

In the case of the first satellite timestamp < the first carrier timestamp < the second satellite timestamp, the first carrier timestamp is between the first satellite timestamp and the second satellite timestamp. In this case, the first fusion ratio $R_1$ may be determined based on a formula (1-8):

$$R_1 = \frac{Y[1].t - G[1].t}{G[2].t - G[1].t} \tag{1-8},$$

where

$Y[1].t$ is the first carrier timestamp, $G[1].t$ is the first satellite timestamp, $G[2].t$ is the second satellite timestamp, and the first fusion ratio is a real number between 0 and 1.

Operation 423: Fuse the first target satellite positioning data and the second target satellite positioning data based on the first fusion ratio to obtain the first target trajectory point data.

In some embodiments, the fusion performed on the first target satellite positioning data and the second target satellite positioning data includes position information fusion, rate fusion, and direction fusion, which are separately described below.

Position fusion: First position information in the first target satellite positioning data and second position information in the second target satellite positioning data are fused based on the first fusion ratio to obtain position information of a first target trajectory point.

Because position information includes a longitude and a latitude, longitudes and latitudes need to be separately fused during the position fusion. In some embodiments, a longitude in the first position information and a longitude in the second position information may be fused based on a formula (1-9):

$$NewPot_1.p.lon = (1 - R_1) \times G[1].p.lon + R_1 \times G[2].p.lon \tag{1-9},$$

where

*G[1].p.lon* is the longitude in the first position information, *G*[2].*p.lon* is the longitude in the second position information, and *NewPot₁.p.lon* is a longitude of the first target trajectory point.

In some embodiments, a latitude in the first position information and a latitude in the second position information are fused based on a formula (1-10):

$$NewPot[1].p.lat = (1 - R_1) \times G[1].p.lat + R_1 \times G[2].p.lat \qquad (1\text{-}10),$$

where

*G*[1].*p.lat* is the latitude in the first position information, *G*[2].*p.lat* is the latitude in the second position information, and *NewPot*[1].*p.lat* is a latitude of the first target trajectory point.

Rate fusion: A first rate in the first target satellite positioning data and a second rate in the second target satellite positioning data are fused based on the first fusion ratio to obtain a target rate of the first target trajectory point.

In some embodiments, the first rate in the first target satellite positioning data and the second rate in the second target satellite positioning data are fused based on a formula (1-11):

$$NewPot[1].v.\text{value} = (1 - R_1) \times G[1].v.\text{value} + R_1 \times G[2].v.\text{value} \qquad (1\text{-}11),$$

where

G[1].v. value is the first rate in the first target satellite positioning data, *G*[2].*v.*value is the second rate in the second target satellite positioning data, and *NewPot*[1].*v.*value is the target rate of the first target trajectory point.

Direction fusion: First direction information is obtained from the first target satellite positioning data, and second direction information is obtained from the second target satellite positioning data. First direction difference information is determined based on the first direction information, the second direction information, and the first fusion ratio. Velocity direction information of the first target trajectory point is determined based on the second direction information and the first direction difference information.

In some embodiments, the first direction difference information may be obtained by multiplying a difference between the first direction information and the second direction information by the first fusion ratio. The difference between the first direction information and the second direction information represents a rotation angle from the first direction information to the second direction information, clockwise rotation corresponding to a positive direction, and counterclockwise rotation corresponding to a negative direction. For example, the first direction information is 90°, and the second direction information is 45°. Because counterclockwise rotation of 45° is required for rotating from 90° to 45°, the difference between the first direction information and the second direction information is -45°. During practical implementation, the difference between the first direction information and the second direction information may be obtained by subtracting the first direction information from the second direction information.

A sum of the second direction information and the first direction difference information is determined to obtain a candidate velocity direction, and whether the candidate velocity direction is greater than 360° or less than 0° is determined. If the candidate velocity direction is greater than 360°, 360° is subtracted from the candidate velocity direction to obtain the velocity direction information of the first target trajectory point. If the candidate velocity direction is less than 0°, 360° is added to the candidate velocity direction to obtain the velocity direction information of the first target trajectory point. If the candidate velocity direction is greater than 0° and less than 360°, the candidate velocity direction is determined as the velocity direction information of the first target trajectory point.

In operation 421 to operation 423, the first fusion ratio is first determined based on the first satellite timestamp obtained from the first target satellite positioning data, the second satellite timestamp obtained from the second target satellite positioning data, and the first carrier timestamp obtained from the first target yaw angle variation data, and the first target satellite positioning data and the second target satellite positioning data are fused based on the first fusion ratio to determine the position information of the first target trajectory point, to provide a position reference for determining a subsequent second target trajectory point.

Still refer to FIG. 4A. Operations after operation 1042 are described.

Operation 1043: Determine $j^{th}$ target satellite positioning data and $(j+1)^{th}$ target satellite positioning data that correspond to $i^{th}$ target yaw angle variation data in the target yaw angle variation sequence.

i=2, 3, ..., N, N is a total quantity of yaw angle variations in the target yaw angle variation sequence, and j is an integer less than or equal to i. An $i^{th}$ carrier timestamp corresponding to the $i^{th}$ target yaw angle variation data is between a $j^{th}$ satellite timestamp corresponding to the $j^{th}$ target satellite positioning data and a $(j+1)^{th}$ satellite timestamp corresponding to the $(j+1)^{th}$ target satellite positioning data.

In some embodiments, during the determining of the $j^{th}$ target satellite positioning data corresponding to the $i^{th}$ target yaw angle variation data in the target yaw angle variation sequence, the $j^{th}$ target satellite positioning data corresponding to the $j^{th}$ satellite timestamp that is earlier than the $i^{th}$ carrier timestamp and that has a shortest time interval from the $i^{th}$ carrier timestamp, and the $(j+1)^{th}$ target satellite positioning data corresponding to the $(j+1)^{th}$ satellite timestamp later than the $j^{th}$ satellite timestamp need to be determined from the target satellite positioning sequence.

A time interval between two adjacent pieces of target satellite positioning data is greater than a time interval between two adjacent pieces of target yaw angle variation data. To be specific, a plurality of pieces of target yaw angle variation data exist between two adjacent pieces of target satellite positioning data. Therefore, different target yaw angle variation data may correspond to the same $j^{th}$ target satellite positioning data and the same $(j+1)^{th}$ target satellite positioning data.

For example, the time interval between two adjacent pieces of target satellite positioning data is 50 milliseconds, and the time interval between two adjacent pieces of target yaw angle variation data is 10 milliseconds. It is assumed that a carrier timestamp corresponding to second target yaw angle variation data is 20:53:35:010, December 8, 2021, the second target yaw angle variation data corresponds to first target satellite positioning data and second target satellite positioning data, a satellite timestamp corresponding to the first target satellite positioning data is 20:53:35:005, December 8, 2021, and a satellite timestamp corresponding to the second target satellite positioning data is 20:53:35:055, December 8, 2021. In this case, a carrier timestamp corresponding to third target yaw angle variation data is 20:53:35:020, December 8, 2021, the third target yaw angle variation data also corresponds to the first target satellite positioning data and the second target satellite positioning data, a carrier timestamp corresponding to fourth target yaw angle variation data is 20:53:35:030, December 8, 2021, and the fourth target yaw angle variation data also corresponds to the first target satellite positioning data and the second target satellite positioning data.

Operation 1044: Determine offset information between an $i^{th}$ target trajectory point and an $(i-1)^{th}$ target trajectory point based on the $j^{th}$ target satellite positioning data and the $(j+1)^{th}$ target satellite positioning data in the target satellite positioning sequence and the $i^{th}$ target yaw angle variation data in the target yaw angle variation sequence.

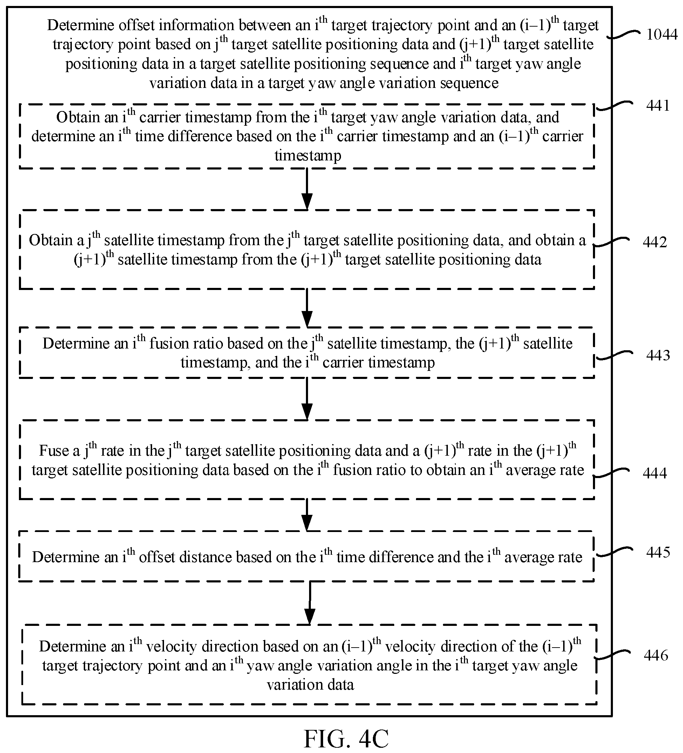

In some embodiments, operation 1044 shown in FIG. 4A may be implemented by operation 441 to operation 446 shown in FIG. 4C. The operations are described below with reference to FIG. 4C.

Operation 441: Obtain the $i^{th}$ carrier timestamp from the $i^{th}$ target yaw angle variation data, and determine an $i^{th}$ time difference based on the $i^{th}$ carrier timestamp and an $(i-1)^{th}$ carrier timestamp.

For example, the $i^{th}$ carrier timestamp is 20:53:35:010, December 8, 2021, and the $(i-1)^{th}$ carrier timestamp is 20:53:35:000, December 8, 2021. In this case, the $i^{th}$ time difference is 10 milliseconds.

Operation 442: Obtain the $j^{th}$ satellite timestamp from the $j^{th}$ target satellite positioning data, and obtain the $(j+1)^{th}$ satellite timestamp from the $(j+1)^{th}$ target satellite positioning data.

For example, a satellite timestamp corresponding to the $j^{th}$ target satellite positioning data is 20:53:35:005, December 8, 2021, and a satellite timestamp corresponding to the $(j+1)^{th}$ target satellite positioning data is 20:53:35:055, December 8, 2021.

Operation 443: Determine an $i^{th}$ fusion ratio based on the $j^{th}$ satellite timestamp, the $(j+1)^{th}$ satellite timestamp, and the $i^{th}$ carrier timestamp.

In some embodiments, the $i^{th}$ fusion ratio $R_i$ may be determined based on a formula (1-12):

$$R_i = \frac{Y[i].t - G[j].t}{G[j+1].t - G[j].t} \tag{1-12}$$

where

$G[j].t$ is the $j^{th}$ satellite timestamp, $G[j+1].t$ is the $(j+1)^{th}$ satellite timestamp, and $Y[i].t$ is the $i^{th}$ carrier timestamp.

With reference to the foregoing example, the $i^{th}$ carrier timestamp is 20:53:35:010, December 8, 2021, the satellite timestamp corresponding to the $j^{th}$ target satellite positioning data is 20:53:35:005, December 8, 2021, and the satellite timestamp corresponding to the $(j+1)^{th}$ target satellite positioning data is 20:53:35:055, December 8, 2021. The $i^{th}$ fusion ratio determined based on the formula (1-12) is 0.1.

Operation 444: Fuse a $j^{th}$ rate in the $j^{th}$ target satellite positioning data and a $(j+1)^{th}$ rate in the $(j+1)^{th}$ target satellite positioning data based on the $i^{th}$ fusion ratio to obtain an $i^{th}$ average rate.

In some embodiments, the $i^{th}$ average rate $v_i$ may be determined based on a formula (1-13):

$$v_i = G[j].v.value + R_i * (G[j+1].v.value - G[j].v.value) \tag{1-13}$$

where

$G[j].v.value$ is the $j^{th}$ rate in the $j^{th}$ target satellite positioning data, and $G[j+1].v.value$ is the $(j+1)^{th}$ rate in the $(j+1)^{th}$ target satellite positioning data.

Operation 445: Determine an $i^{th}$ offset distance based on the $i^{th}$ time difference and the $i^{th}$ average rate.

In some embodiments, a product of the $i^{th}$ time difference and the $i^{th}$ average rate is the $i^{th}$ offset distance.

Operation 446: Determine an $i^{th}$ velocity direction based on an $(i-1)^{th}$ velocity direction of the $(i-1)^{th}$ target trajectory point and an $i^{th}$ yaw angle variation angle in the $i^{th}$ target yaw angle variation data.

In some embodiments, a sum of the $(i-1)^{th}$ velocity direction and the $i^{th}$ yaw angle variation angle is first determined, and then whether the sum of the $(i-1)^{th}$ velocity direction and the $i^{th}$ yaw angle variation angle is between 0° and 360° is determined. If the sum is between 0° and 360°, the sum is determined as the $i^{th}$ velocity direction. If the sum is not between 0° and 360°, the sum of the $(i-1)^{th}$ velocity direction and the $i^{th}$ yaw angle variation angle is transformed to be between 0° and 360° to obtain the $i^{th}$ velocity direction. When the sum is less than 0°, 360° is added to the sum to obtain the $i^{th}$ velocity direction. When the sum is greater than 360°, 360° is subtracted from the sum to obtain the $i^{th}$ velocity direction.

For example, the $(i-1)^{th}$ velocity direction is 0°, and the $i^{th}$ yaw angle variation angle is 10°. In this case, the sum of the $(i-1)^{th}$ velocity direction and the $i^{th}$ yaw angle variation angle is 10°. Because 10° is between 0° and 360°, it is determined that the $i^{th}$ velocity direction is 10°. Assuming that the $(i-1)^{th}$ velocity direction is 0° and the $i^{th}$ yaw angle variation angle is -10°, the sum of the $(i-1)^{th}$ velocity direction and the $i^{th}$ yaw angle variation angle is -10°. Because -10° is not between 0° and 360°, 360° is added to -10° to obtain 350°, and it is determined that the $i^{th}$ velocity direction is 350°.

During the determining of the offset information between the $(i-1)^{th}$ target trajectory point and the $i^{th}$ target trajectory point in operation 441 to operation 446, a time difference between the $(i-1)^{th}$ target trajectory point and the $i^{th}$ target trajectory point is first determined. Then the $i^{th}$ fusion ratio is determined based on the $j^{th}$ satellite timestamp, the $(j+1)^{th}$ satellite timestamp, and the $i^{th}$ carrier timestamp, and rates are fused based on the $i^{th}$ fusion ratio to obtain an average rate. Then an offset distance is determined based on a distance formula. During determining of a velocity direction, the $i^{th}$ velocity direction is determined based on the $(i-1)^{th}$ velocity direction and the $i^{th}$ yaw angle variation angle, to update a moving direction of the carrier based on a yaw angle variation angle when a yaw angle of the carrier changes.

Still refer to FIG. 4A. Operations after operation 1044 are described.

Operation 1045: Determine $i^{th}$ target trajectory point data based on $(i-1)^{th}$ target trajectory point data and the offset information.

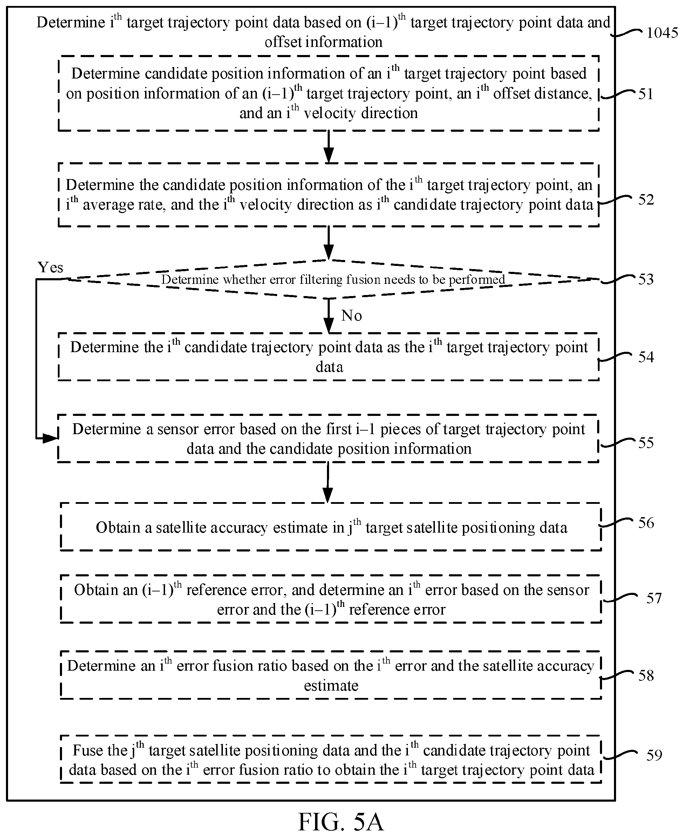

In some embodiments, operation 1045 shown in FIG. 4A may be implemented by operation 51 to operation 59 shown in FIG. 5A. The operations are described below with reference to FIG. 5A.

Operation 51: Determine candidate position information of the $i^{th}$ target trajectory point based on position information of the $(i-1)^{th}$ target trajectory point, the $i^{th}$ offset distance, and the $i^{th}$ velocity direction.

The position information of the $(i-1)^{th}$ target trajectory point includes a longitude and a latitude of the $(i-1)^{th}$ target trajectory point. The candidate position information of the $i^{th}$ target trajectory point includes a candidate longitude and a candidate latitude of the $i^{th}$ target trajectory point. In some embodiments, a circumference of a cross section at a current latitude is first determined by using the latitude of the $(i-1)^{th}$ target trajectory point. A horizontal translation distance between the $(i-1)^{th}$ target trajectory point and the $i^{th}$ target trajectory point is determined based on the $i^{th}$ offset distance and the $i^{th}$ velocity direction. The horizontal translation distance is divided by the circumference of the cross section at the current latitude and then by 360 to obtain horizontal lateral translation degrees. The horizontal lateral translation degrees are added to the longitude of the $(i-1)^{th}$ target trajectory point to obtain the candidate longitude of the $i^{th}$ target trajectory point.

A vertical translation distance between the $(i-1)^{th}$ target trajectory point and the $i^{th}$ target trajectory point is determined based on the $i^{th}$ offset distance and the $i^{th}$ velocity direction. The vertical translation distance is divided by a longitudinal circumference of the Earth and then by 360 to obtain vertical longitudinal translation degrees. The vertical longitudinal translation degrees are added to the latitude of the $(i-1)^{th}$ target trajectory point to obtain the candidate latitude of the $i^{th}$ target trajectory point.

Operation 52: Determine the candidate position information of the $i^{th}$ target trajectory point, the $i^{th}$ average rate, and the $i^{th}$ velocity direction as $i^{th}$ candidate trajectory point data.

Operation 53: Determine whether error filtering fusion needs to be performed.

When it is determined that no error filtering fusion needs to be performed, operation 54 is performed. When it is determined that error filtering fusion needs to be performed, operation 55 is performed.

Operation 54: Determine the $i^{th}$ candidate trajectory point data as the $i^{th}$ target trajectory point data.

If no error filtering fusion needs to be performed, the $i^{th}$ candidate trajectory point data is determined as the $i^{th}$ target trajectory point data.

Operation 55: Determine a sensor error based on the first i-1 pieces of target trajectory point data and the candidate position information.

In some embodiments, the sensor error may be determined by using a preset error estimation function with the calculated first i-1 pieces of target trajectory point data and candidate position information as inputs.

Operation 56: Obtain a satellite accuracy estimate in the $j^{th}$ target satellite positioning data.

In some embodiments, the satellite accuracy estimate in the $j^{th}$ target satellite positioning data may be obtained by performing, by using a trained accuracy estimation model, accuracy estimation on a quantity of satellites, satellite mass, a historical trajectory, and other information.

Operation 57: Obtain an $(i-1)^{th}$ reference error, and determine an $i^{th}$ error based on the sensor error and the $(i-1)^{th}$

reference error.

In some embodiments, the (i-1)<sup>th</sup> reference error is determined based on an (i-1)<sup>th</sup> error and an (i-1)<sup>th</sup> error fusion ratio. In some embodiments, the (i-1)<sup>th</sup> reference error is determined based on a formula (1-14):

$$Err'_{i-1} = Err_{i-1} * (1 - K_{i-1}) \qquad (1\text{-}14),$$

where

$Err'_{i-1}$ is the (i-1)<sup>th</sup> reference error, $Err_{i-1}$ is the (i-1)<sup>th</sup> error, and $K_{i-1}$ is the (i-1)<sup>th</sup> error fusion ratio.

The i<sup>th</sup> error is a sum of the sensor error and the (i-1)<sup>th</sup> reference error.

Operation 58: Determine an i<sup>th</sup> error fusion ratio based on the i<sup>th</sup> error and the satellite accuracy estimate.

In some embodiments, an error sum of the i<sup>th</sup> error and the satellite accuracy estimate is further determined, and then a quotient of the satellite accuracy estimate and the error sum is determined as the i<sup>th</sup> error fusion ratio.

Operation 59: Fuse the j<sup>th</sup> target satellite positioning data and the i<sup>th</sup> candidate trajectory point data based on the i<sup>th</sup> error fusion ratio to obtain the i<sup>th</sup> target trajectory point data.

In some embodiments, first, j<sup>th</sup> position information, j<sup>th</sup> direction information, and the j<sup>th</sup> rate in the j<sup>th</sup> target satellite positioning data are obtained, and the candidate position information, the i<sup>th</sup> velocity direction, and the i<sup>th</sup> average rate in the i<sup>th</sup> candidate trajectory point data are obtained. Then a position difference between the candidate position information and the j<sup>th</sup> position information is determined, a direction difference between the i<sup>th</sup> velocity direction and a j<sup>th</sup> direction is determined, and a rate difference between the i<sup>th</sup> average rate and the j<sup>th</sup> rate is determined.

Then a sum of the j<sup>th</sup> position information and a product of the position difference and the i<sup>th</sup> error fusion ratio is determined as target position information of the i<sup>th</sup> target trajectory point, a sum of the j<sup>th</sup> direction information and a product of the direction difference and the i<sup>th</sup> error fusion ratio is determined as target direction information of the i<sup>th</sup> target trajectory point, and a sum of the j<sup>th</sup> rate and a product of the rate difference and the i<sup>th</sup> error fusion ratio is determined as a target rate of the i<sup>th</sup> target trajectory point.

In operation 451 to operation 459, candidate trajectory point data of the i<sup>th</sup> target trajectory point is first determined. If no error filtering fusion needs to be performed, the candidate trajectory point data is determined as final trajectory point data of the i<sup>th</sup> target trajectory point. If error filtering fusion needs to be performed, the sensor error needs to be first estimated, an error fusion ratio is determined based on the sensor error and an accuracy estimate in satellite positioning data, and the j<sup>th</sup> target satellite positioning data and the i<sup>th</sup> candidate trajectory point data are fused based on the i<sup>th</sup> error fusion ratio to obtain the i<sup>th</sup> target trajectory point data. In this way, more smooth, stable, and accurate target trajectory point data can be obtained through error filtering fusion.

In the data processing method provided in embodiments of this application, after satellite positioning information of a terminal is obtained, a sensor data set captured by a target sensor in the terminal is obtained, the sensor data set including at least an acceleration sensor data set and a gyroscope data set. Yaw angle variation information of a carrier in which the terminal is located during movement is determined based on the acceleration sensor data set and the gyroscope data set. Then the satellite positioning information and the yaw angle variation information are fused to obtain moving trajectory information of the carrier. In embodiments of this application, the sensor data set of the terminal is incorporated into an observation dimension, and the yaw angle variation information determined by using the sensor data set is fused with the satellite positioning information. In this way, actual trajectory information of the carrier carrying the terminal can be more accurately determined by using the yaw angle variation information in a case that the satellite positioning information is missing or satellite positioning quality is poor. This improves accuracy of a moving trajectory.

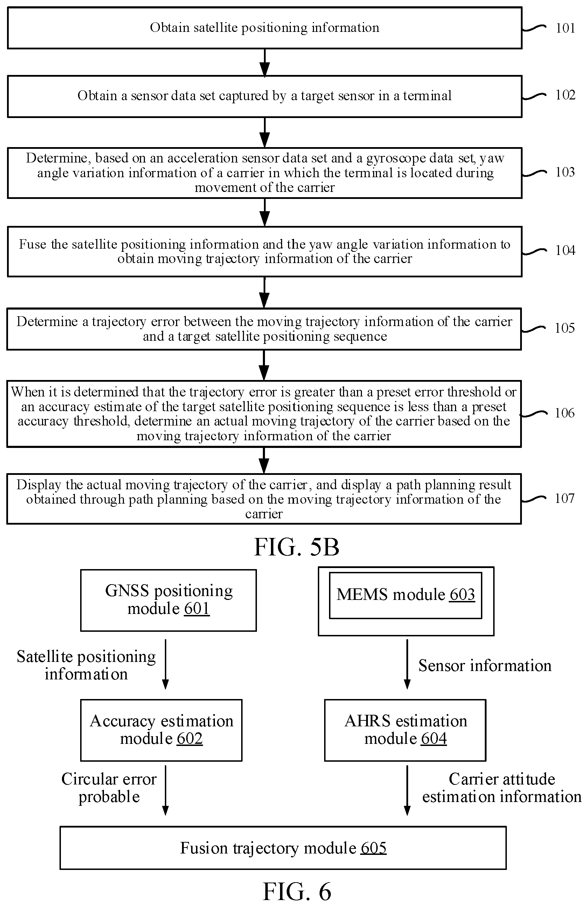

In some embodiments, as shown in FIG. 5B, the following operation 105 and operation 106 may be further performed after operation 104. The operations are described below.

Operation 105: Determine a trajectory error between the moving trajectory information of the carrier and the target satellite positioning sequence.

In some embodiments, target trajectory point data within preset duration may be obtained from the moving trajectory information of the carrier each time, and target satellite positioning data within the preset duration is obtained from the target satellite positioning sequence. For example, target trajectory point data and target satellite positioning data within 1 second are obtained each time. Then position information in each piece of target trajectory point data and position information in each piece of target satellite positioning data are determined, a distance between each target trajectory point and each target satellite anchor point is determined, and a shortest distance among all distances is determined as a trajectory error within the preset duration.

Operation 106: When it is determined that the trajectory error is greater than a preset error threshold or an accuracy estimate of the target satellite positioning sequence is less than a preset accuracy threshold, determine an actual moving trajectory of the carrier based on the moving trajectory information of the carrier.

The moving trajectory information of the carrier is obtained by combining absolute positioning accuracy of the GNSS and local relative positioning accuracy of the sensor, and therefore has higher accuracy. When the trajectory error is greater than the preset error threshold, satellite positioning data has a large deviation from a moving trajectory of the carrier; or when the accuracy estimate of the target satellite positioning sequence is less than the preset accuracy threshold, current target satellite positioning data has low credibility. In this case, the actual moving trajectory of the carrier may be determined based on the moving trajectory information of the carrier. The actual moving trajectory of the carrier may be obtained by sequentially connecting adjacent target trajectory points in the moving trajectory information.

Operation 107: Display the actual moving trajectory of the carrier, and display a path planning result obtained through path planning based on the moving trajectory information of the carrier.

In some embodiments, the actual moving trajectory of the carrier may be displayed in a preset color on a display interface of the terminal. In some embodiments, the terminal may transmit the moving trajectory information of the carrier to a server. The server performs path planning based on the moving trajectory information of the carrier. The server obtains current position information of the carrier from the moving trajectory information of the carrier, obtains preset destination information, and performs path planning based on the current position information of the carrier and the destination information to obtain a path planning result. The server transmits the path planning result to the terminal. The terminal displays the path planning result. During the path planning, the server uses the moving trajectory information that is obtained by fusing the satellite positioning information and the yaw angle variation information. The moving trajectory information can effectively combine absolute positioning accuracy of the GNSS and local relative positioning accuracy of the sensor, and therefore has higher accuracy.

The following describes exemplary application of embodiments of this application in a real application scenario.

The data processing method provided in embodiments of this application may be applied to mobile phone navigation and vehicle navigation (a vehicle system without integrating vehicle wheel speed information) to avoid negative impact, such as false yawing, freezing, and unsmoothness, caused by insufficient GNSS positioning accuracy in some complex scenarios (under an elevated highway, at an intersection or a fork, or at a low speed), to improve product effect.

As a quantity of cars continuously increases, map navigation is increasingly widely applied. In the field of map navigation, accurate positioning plays an important role in navigation route planning, yaw judgment, road condition analysis, and other applications. Accurate positioning can bring a user more comfortable experience and give accurate and appropriate driving guidance to accurately and quickly guide the user to a destination while avoiding violations and ensuring driving safety. This improves traveling safety of cars, reduces a traffic accident rate, improves traffic safety, and alleviates traffic congestion.

Embodiments of this application provide a data processing system. FIG. 6 is a schematic structural diagram of composition of a data processing system according to an embodiment of this application. As shown in FIG. 6, the data processing system includes a GNSS positioning module 601, an accuracy estimation module 602, a MEMS module 603, an attitude and heading reference system (AHRS) estimation module 604, and a fusion trajectory module 605. The following describes the modules separately.

The GNSS positioning module 601 is configured to obtain GNSS positioning information (which may be based on ordinary GNSS positioning, precise point positioning (PPP), real-time kinematic (RTK) positioning, or the like) of a navigation system to obtain anchor point information at a current moment. The anchor point information includes position information P (including latitude and longitude coordinates), time T at which a current anchor point is obtained, and a velocity V (including a velocity value and direction).

The accuracy estimation module 602 is configured to perform accuracy measurement. Accuracy measurement is a process of calculating a difference between a position obtained through positioning and a real position. The real position exists in the real world, and the position obtained through positioning is obtained by using a positioning method or a positioning system. However, in most cases, it is difficult or even impossible to obtain the real position. Effective and accurate accuracy estimation can provide reference for an algorithm module or a use policy in practice.

Accuracy estimation may be performed in many manners. For example, accuracy estimation is performed by using a trained accuracy estimation model based on GNSS satellite mass, historical trajectory information, and other data used in GNSS positioning to obtain an accuracy estimate. The accuracy estimate may be expressed in the form of a CEP such as CEP95 or CEP99. For example, CEP95=E means that, a probability that a real position falls within a circle with an output position as a center and with a radius of E is 95%.

The MEMS module 603 is configured to capture a reading of a MEMS sensor in a terminal. In embodiments of this application, a three-axis acceleration sensor result, a three-axis gyroscope result, and a three-axis magnetic sensor result in the MEMS sensor are captured.

The AHRS estimation module is configured to estimate an initial attitude of a mobile phone/in-vehicle device based on output data of a mobile phone/in-vehicle device sensor. The AHRS includes a three-axis accelerometer, a three-axis magnetometer, and a three-axis gyroscope. The AHRS estimation module estimates an initial attitude based on output data of the three-axis accelerometer, the three-axis magnetometer, and the three-axis gyroscope. The AHRS can provide yaw angle, roll angle, and pitch angle information for a device.

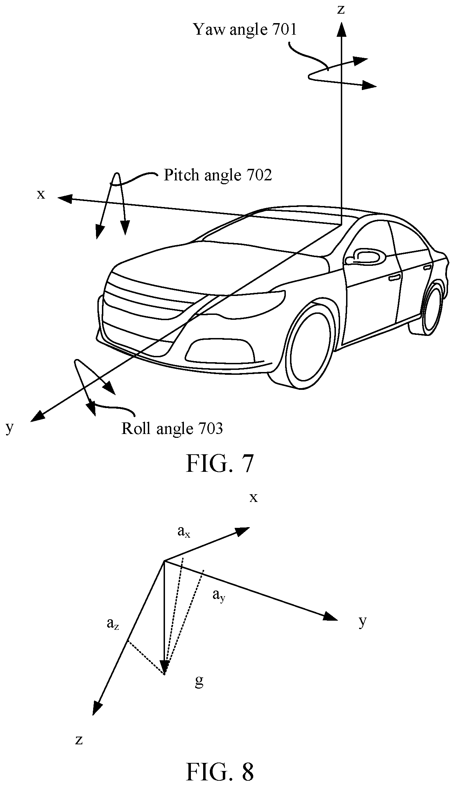

As shown in FIG. 7, a three-dimensional coordinate system O-xyz may be obtained with a center of a vehicle as an origin, a left side of the vehicle as an X-axis, a heading direction as a Y-axis, and an upward direction perpendicular to a vertical plane as a Z-axis (a definition of the coordinate system is not limited, and alternatively, an X-axis may be in the heading direction, a Y-axis may be on a left side, and a Z-axis may be in the upward direction). In this embodiment of this application, a rotation angle around the Z-axis is defined as a yaw angle 701, representing a variation of a heading angle of the vehicle (which indicates that the vehicle turns left or right); a rotation angle around the X-axis is defined as a pitch angle 702, representing a variation of a pitch angle of the vehicle (which indicates an upslope/downslope state of the vehicle); and a rotation angle around the Y-axis is defined as a roll angle 703, representing a lateral tilt state of the vehicle. The yaw angle, the roll angle, and the pitch angle of the vehicle may be decomposed to an X-Y plane, an X-Z plane, and a Y-Z plane respectively for expression.

Usually, during driving, a mobile phone/in-vehicle device is placed in a stationary state relative to a vehicle at a fixed attitude, and a fixed angle exists between a three-dimensional coordinate system of the vehicle and a three-dimensional coordinate system of the mobile phone. Therefore, the mobile phone/in-vehicle device has an initial placement attitude relative to the vehicle coordinate system. Assuming that initial values of a yaw angle, a roll angle, and a pitch angle are $z_0$, $y_0$, and $x_0$, the three initial values may be estimated by using an AHRS estimation algorithm. In embodiments of this application, the AHRS algorithm is not limited, and may be, for example, a complementary filtering algorithm, a gradient descent algorithm, or an extended Kalman filter (EKF) attitude fusion algorithm.

As shown in FIG. 8, a vector sum obtained based on a three-axis acceleration sensor in the stationary state is a gravity acceleration g. Based on this relationship, the following equation may be obtained:

$$\begin{bmatrix} a_x \\ a_y \\ a_z \end{bmatrix} = C_v^{cT} * \begin{bmatrix} 0 \\ 0 \\ |g| \end{bmatrix} \qquad (2\text{-}1),$$

where

$a_y$, $a_y$, and $a_z$ are accelerometer readings of an X-axis, a Y-axis, and a Z-axis, $C_v^c$ indicates a conversion matrix between the vehicle coordinate system and the mobile phone/in-vehicle device coordinate system, and $C_v^c$ may be obtained based on the following formula (2-2):

$$C_v^c = R_z * R_y * R_x$$
$$= \begin{bmatrix} \cos(z_0) & -\sin(z_0) & 0 \\ \sin(z_0) & \cos(z_0) & 0 \\ 0 & 0 & 1 \end{bmatrix} * \begin{bmatrix} \cos(y_0) & 0 & \sin(y_0) \\ 0 & 1 & 0 \\ -\sin(y_0) & 0 & \cos(y_0) \end{bmatrix} * \begin{bmatrix} 1 & 0 & 0 \\ 0 & \cos(x_0) & -\sin(x_0) \\ 0 & \sin(x_0) & \cos(x_0) \end{bmatrix} \quad (2\text{-}2),$$

where
g is a local gravity acceleration, is usually approximately 9.8m/$s^2$, varies at different latitudes, and meets a formula (2-3):

$$|g| = \sqrt[2]{a_x^2 + a_y^2 + a_z^2} \qquad (2\text{-}3).$$

The following may be calculated based on the formulas (2-1), (2-2), and (2-3):

$$\begin{bmatrix} a_x \\ a_y \\ a_z \end{bmatrix} = \begin{bmatrix} -g * \cos(x_0) * \sin(y_0) \\ g \sin(x_0) \\ g * \cos(x_0) * \cos(y_0) \end{bmatrix} \qquad (1\text{-}1).$$

Based on the formula (1-1), the initial value $x_0$ of the pitch angle is as follows:

$$x_0 = arcsin \frac{a_y}{\sqrt[2]{a_x{}^2 + a_y{}^2 + a_z{}^2}} \qquad (1\text{-}2);$$

and
the initial value $y_0$ of the roll angle is as follows:

$$y_0 = arctan \frac{-a_x}{a_z} \qquad (1\text{-}3).$$

In this embodiment of this application, the yaw angle variation information, namely, a difference between heading angles at two adjacent moments, of the carrier needs to be calculated. Therefore, regardless of a value of an initial yaw angle, the obtained yaw angle variation information is consistent. Therefore, to reduce calculation complexity, an operation of calculating the initial yaw angle may be omitted, and a preset initial yaw angle of the terminal relative to the carrier is directly obtained. In some embodiments, $z_0$ may be determined based on a reading of the three-axis magnetometer, a heading angle of the vehicle, and the calculated $x_0$ and $y_0$.

After the initial value $z_0$ of the yaw angle, the initial value $y_0$ of the roll angle, and the initial value $x_0$ of the pitch angle are determined, the conversion matrix $C_v^c$ may be obtained based on the formula (2-2). Therefore, after a reading of the three-axis gyroscope of the mobile phone/in-vehicle device is obtained, three-axis gyroscope rotation angles of the vehicle may be obtained based on a formula (2-4):

$$\begin{bmatrix} gyr_x{}' \\ gyr_y{}' \\ gyr_z{}' \end{bmatrix} = C_v^{cT-1} * \begin{bmatrix} gyr_x \\ gyr_y \\ gyr_z \end{bmatrix} \qquad (2\text{-}4),$$

where
$gyr_x{}'$, $gyr_y{}'$, and $gyr_z{}'$ represent three-axis gyroscope rotation angles in the vehicle coordinate system. This embodiment of this application mainly focuses on $gyr_z{}'$, namely, a yaw angle of the vehicle. Based on this, yaw angle variation information of the vehicle can be finally obtained. The yaw angle variation information is 2-tuple information: $(t, \Delta\theta_t^{yaw})$, where t corresponds to a current timestamp, $\Delta\theta_t^{yaw}$ represents a yaw angle variation corresponding to the current timestamp t, namely, a yaw angle difference of $gyr_z{}'$ at the moment t and a moment t-1.

The fusion trajectory module 605 is configured to obtain a new vehicle positioning trajectory based on a GNSS positioning result and the yaw angle variation information of the vehicle.

It is assumed that the GNSS positioning information is expressed as a four-tuple sequence G(t, p, v, e). t represents a timestamp of a signal. p represents anchor point information of the signal, and the anchor point information includes p.lon and p.lat that represent a longitude and a latitude of the anchor point respectively. v represents velocity information of the vehicle, including v.value and v.heading that represent a velocity value and a velocity direction respectively (a definition of the direction is not limited, and herein, it may be assumed that the direction is expressed as a value within [0, 360) that is 0 in the true north and that is positive in a clockwise direction). e represents an accuracy estimate determined by the accuracy estimation module. The yaw angle variation information of the vehicle is expressed as a two-tuple sequence Y (t, deltaYaw), where t represents a timestamp of a signal, and deltaYaw represents a yaw angle variation of the vehicle at a moment t. In this embodiment of this application, each piece of four-tuple data in the G sequence corresponds to a G sequence index, and each piece of two-tuple data in the Y sequence corresponds to a Y sequence index.

In this embodiment of this application, to reduce calculation overheads, calculation may not be performed for an entire positioning trajectory. In this case, start time and end time of positioning trajectory calculation need to be obtained, and are denoted as startTime and endTime. If an entire positioning trajectory needs to be calculated, startTime is defined as a timestamp of the first signal, and endTime is defined as a latest timestamp of a current moment.

During calculation of a positioning trajectory of the vehicle, an index whose timestamp has a smallest difference from startTime is first determined from the Y sequence. To be specific, an index with smallest ABS(Y.t-startTime) is determined, and is denoted as startYIndex. ABS() indicates to calculate an absolute value. An index whose timestamp has a smallest difference from endTime is determined from the Y sequence. To be specific, an index with smallest ABS(Y.t-endTime) is determined, and is denoted as endYIndex. An index whose timestamp is earlier than and closest to Y[firstYIndex].t, namely, an index with smallest ABS(G.t-Y[firstYIndex].t) under the condition of G.t<Y[firstYIndex].t, is determined from the G sequence, and is denoted as startGIndex. Then trajectory calculation from startYIndex to endYIndex is performed. In this embodiment of this application, a signal frequency of Y cannot be lower than a frequency of G.

The following describes an implementation process of the trajectory calculation from startYIndex to endYIndex.

Operation 1: Determine an initial reference point.

In some embodiments, G[startGIndex] and G[startGIndex+1] are first obtained from the G sequence, Y[startYIndex] is obtained from the Y sequence, and then a first fusion ratio is determined based on timestamps in G[startGIndex], G[startGIndex+1], and Y[startYIndex]. In some embodiments, the first fusion ratio may be obtained based on a formula (2-5):

$$R_1 = \frac{Y[startYIndex].t - G[startGIndex].t}{G[startGIndex+1].t - G[startGIndex].t} \qquad (2\text{-}5).$$

Position information in G[startGIndex] and position information in G[startGIndex+1] are fused based on the first fusion ratio to obtain position information of the initial reference point, and a velocity value in G[startGIndex] and a velocity value in G[startGIndex+1] are fused based on the first fusion ratio to obtain a velocity value of the initial reference point. Fusion of longitudes in position information is described below as an example. The longitudes in the position information may be fused based on a formula (2-6):

$$NewPos_1.p.lon = (1-R_1)*G[startGIndex].p.lon + R_1*G[startGIndex+1].p.lon$$

(2-6),

where
$NewPos_1$.p.lon is a longitude of the initial reference point, $G$[*startGIndex*].p.lon is a longitude in position information of $G$[*startGIndex*], and $G$[*startGIndex*+1].p.lon is a longitude in position information of $G$[*startGIndex* + 1].

When latitudes or velocity values in the position information are fused based on the first fusion ratio, only the longitudes in the formula (2-6) need to be updated to the latitudes and the velocity values.

During determining of a velocity direction of the initial reference point, an initial direction difference between G[startGIndex] and G[startGIndex+1] is first determined, then the initial direction difference is multiplied by the first fusion ratio to obtain a target direction difference, and finally, the velocity direction of the initial reference point is determined based on a velocity direction in G[startGIndex] and the target direction difference.

The velocity direction in G[startGIndex] is an angle defined in a direction system and falls within a value range of [0, 360). The initial directional difference between G[startGIndex] and G[startGIndex+1] is an angle of rotation from the velocity direction in G[startGIndex] to a velocity direction in G[startGIndex+1], where a value in a clockwise direction is positive, a value in a counterclockwise direction is negative, and a value range is [-180, 180].

For example, the velocity direction in G[startGIndex] is 340°, and the velocity direction in G[startGIndex+1] is 350°. Because an angle of rotation from the velocity direction in G[startGIndex] to the velocity direction in G[startGIndex+1] is 10° clockwise, the initial direction difference between G[startGIndex] and G[startGIndex+1] is 10°. For another example, the velocity direction in G[startGIndex] is 100°, and the velocity direction in G[startGIndex+1] is 90°. Because an angle of rotation from the velocity direction in G[startGIndex] to the velocity direction in G[startGIndex+1] is 10° counterclockwise, the initial direction difference between G[startGIndex] and G[startGIndex+1] is -10°.

The determining the velocity direction of the initial reference point based on the velocity direction in G[startGIndex] and the target direction difference is implemented as follows: A sum of the velocity direction in G[startGIndex] and the target direction difference is first determined. If the sum is within the range of [0, 360), the sum is determined as the velocity direction of the initial reference point. If the sum is beyond the range of [0, 360) and the sum is less than 0, 360 is added to the sum to obtain the velocity direction of the initial reference point. If the sum is beyond the range of [0, 360) and the sum is greater than or equal to 360, 360 is subtracted from the sum to obtain the velocity direction of the initial reference point.

Operation 2: Determine a fusion anchor point between startYIndex+1 and endIndex.

During the determining of the fusion anchor point between startYIndex+1 and endIndex, offset information between a fusion anchor point to be determined this time and a previous determined fusion anchor point needs to be determined, and then position information of the fusion anchor point to be determined this time is determined based on the previous fusion anchor point and the offset information.

In some embodiments, Y-sequence data in Y[startYIndex+1] to Y[endYIndex] is sequentially determined as current to-be-processed data (curYsignal), and then a start position and an end position corresponding to each curYsignal are determined from the G sequence, where the following conditions are met: posStart.t<=curYsignal.t, and posEnd.t>cur-Ysignal.t. Then a fusion ratio for each curYsignal is determined based on timestamps of each curYsignal and the start position and the end position corresponding to each curYsignal. In this embodiment of this application, the fusion ratio for curYsignal may be obtained based on a formula (2-7):

$$R_{cur} = \frac{curYSignal.t - posStart.t}{posEnd.t - posStart.t} \qquad (2\text{-}7),$$

where

*curYSignal.t* is a timestamp of curYsignal, *posStart.t* is a timestamp of the start position corresponding to curYsignal, and *posEnd.t* is a timestamp of the end position corresponding to curYsignal.

Based on the fusion ratio for curYsignal, velocity values of the start position and the end position corresponding to curYsignal are fused based on a formula (2-8) to obtain a velocity value *curSpd* of curYsignal:

$$curSpd = posStart.v.value + R_{cur} * (posEnd.v.value - posStart.v.value) \qquad (2\text{-}8), \text{\textbackslash}$$

where

*posStart.v.value* is the velocity value of the start position corresponding to curYsignal, and *posEnd.v.value* is the velocity value of the end position corresponding to curYsignal.

A time difference between curYsignal and a previous fusion anchor point of curYsignal is determined, and the velocity value of curYsignal is multiplied by the time difference to obtain an offset distance.

In this embodiment of this application, a velocity direction of curYsignal is determined based on a sum of a velocity direction of the previous fusion anchor point and a yaw angle variation angle of the vehicle in curYsignal.

If a longitude and a latitude of the previous fusion anchor point and the offset distance and an offset direction between the current to-be-processed curYsignal and the previous fusion anchor point are known, a longitude and a latitude of curYsignal can be determined. After the velocity value, the velocity direction, the longitude, and the latitude of curYsignal are determined, position information of a fusion anchor point corresponding to curYsignal is obtained.

Operation 3: If it is determined that filtering fusion needs to be performed, filtering fusion is performed on the fusion anchor point corresponding to curYsignal and the start position corresponding to curYsignal to obtain a final trajectory anchor point.

In some embodiments, a sensor error (E_Sensor) of the fusion anchor point corresponding to curYsignal may be estimated based on a determined historical fusion anchor point and the fusion anchor point corresponding to curYsignal, an accuracy estimate (E_GSignal) of the start position corresponding to curYsignal and a previous reference error (Err_last) are obtained, a sum of the previous reference error and the sensor error is determined as a current error (Err_now), and then a filtering fusion ratio $R_k$ is determined based on a formula (2-9):

$$R_k = \frac{E\_Gsignal}{E\_Gsignal + Err\_now} \qquad (2\text{-}9).$$

The start position corresponding to curYsignal and the longitude, the latitude, and the velocity value, determined in operation 2, of the fusion anchor point corresponding to curYsignal are fused based on the filtering fusion ratio. Fusion with the longitude based on the filtering fusion ratio is described below as an example. In some embodiments, the start position corresponding to curYsignal and the longitude of the fusion anchor point corresponding to curYsignal may be fused based on a formula (2-10):

$$FusionPoint.p.lon = posStart.p.lon + R_k * (NewPos.p.lon - posStart.p.lon) \qquad (2\text{-}10),$$

where

*FusionPoint.p.lon* is a longitude of a trajectory anchor point obtained through filtering fusion, and *NewPos.p.lon* is the longitude, determined in operation 2, of the fusion anchor point corresponding to curYsignal.

When the start position corresponding to curYsignal and the latitude or the velocity value, determined in operation 2, of the fusion anchor point corresponding to curYsignal are fused based on the filtering fusion ratio, only the longitude in the formula (2-10) needs to be updated to the latitude or the velocity value.

After position information of the trajectory anchor point obtained through filtering fusion is determined, the previous reference error is updated based on a formula (2-11):

$$Err\_last \ = \ \left(1 \ - \ R_k\right) * Err\_now \qquad\qquad (2\text{-}11).$$

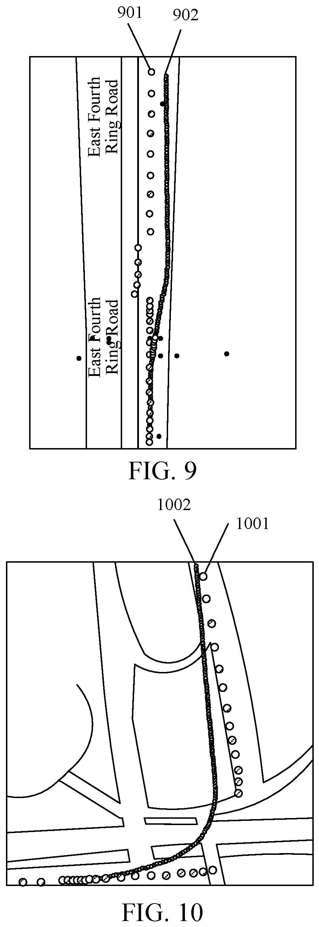

Based on the foregoing three operations, a calculated trajectory based on satellite positioning coordinates and sensor signals can be finally obtained. FIG. 9 is a schematic diagram of a scenario in which a data processing method provided in embodiments of this application is applied under an elevated highway. In FIG. 9, a larger dot 901 is an original GNSS signal anchor point with a frequency of 1 Hz, and a smaller dot 902 is a new trajectory signal with a frequency of 10 Hz that is obtained through fusion based on a GNSS signal and a mobile phone sensor. It can be learned from FIG. 9 that, because satellite signals are blocked under the elevated highway, accuracy of an anchor point obtained depending only on a satellite system is significantly reduced, and a left-right drift may occur. After sensor signals are fused, it can be learned that trajectory points become continuous and stable, and it can even be learned that a vehicle changes a lane to the right under the elevated highway.

FIG. 10 is a schematic diagram of a scenario in which a data processing method provided in embodiments of this application is applied at an intersection. A larger dot 1001 is an original GNSS signal anchor point with a frequency of 1 Hz, and a smaller dot 1002 is a new trajectory signal obtained through fusion based on a GNSS signal and a mobile phone sensor. In some intelligent terminals, a GNSS anchor point may have some road binding effects, leading to freezing and jumping between adjacent GPS points during turning at the intersection. After sensor data is fused, it can be learned from FIG. 10 that a more complete and smoother turning trajectory can be obtained. This is very important for a navigation map to quickly recognize turning behavior of a user.

Embodiments of this application provide a data processing method, to fuse a GNSS anchor point and a device sensor signal to obtain a new positioning trajectory and effectively combine absolute positioning accuracy of a GNSS with local relative positioning accuracy of a sensor. This can effectively avoid trajectory drifts caused by weak GNSS signals and positioning errors or inaccurate positioning caused by road binding or road attachment on some terminals, thereby improving accuracy of a positioning trajectory. In some key areas such as intersections and forks, a real driving trajectory of a user can be more quickly and accurately determined based on more accurate positioning. This plays an important role in navigation route planning, yaw judgment, road condition analysis, and other applications.

Related data, such as sensor data, position information, and moving trajectory information, is involved in embodiments of this application. When embodiments of this application are applied to a specific product or technology, user permission or consent is required, and collection, use, and processing of related data need to comply with related laws, regulations, and standards in related countries and regions.

Related data, such as satellite positioning information, is involved in embodiments of this application. When embodiments of this application are applied to a specific product or technology, user permission or consent is required, and collection, use, and processing of related data need to comply with related laws, regulations, and standards in related countries and regions.

The following further describes an exemplary structure of the data processing apparatus 455 provided in embodiments of this application when the apparatus is implemented as software modules. In some embodiments, as shown in FIG. 2, software modules of the object processing apparatus 455 that are stored in the memory 450 may include: a first obtaining module 4551, configured to obtain satellite positioning information; a second obtaining module 4552, configured to obtain a sensor data set captured by a target sensor in a terminal, the sensor data set including at least an acceleration sensor data set and a gyroscope data set; a first determining module 4553, configured to determine, based on the acceleration sensor data set and the gyroscope data set, yaw angle variation information of a carrier in which the terminal is located during movement of the carrier; and a first fusion module 4554, configured to fuse the satellite positioning information and the yaw angle variation information to obtain moving trajectory information of the carrier.

In some embodiments, the first determining module 4553 is further configured to: obtain initial acceleration sensor data of the terminal from the acceleration sensor data set; determine initial attitude information of the terminal relative to the carrier based on the initial acceleration sensor data; determine a conversion matrix between a carrier coordinate system and a terminal coordinate system based on the initial attitude information; obtain each piece of first gyroscope data in the gyroscope data set; and determine the yaw angle variation information of the carrier based on the conversion matrix and each piece of first gyroscope data.

In some embodiments, the initial acceleration sensor data includes initial X-axis acceleration sensor data, initial Y-axis acceleration sensor data, and initial Z-axis acceleration sensor data. Correspondingly, the first determining module 4553 is further configured to: determine an initial pitch angle of the terminal relative to the carrier based on the initial X-axis acceleration sensor data, the initial Y-axis acceleration sensor data, and the initial Z-axis acceleration sensor data; determine an initial roll angle of the terminal relative to the carrier based on the initial X-axis acceleration sensor data and the initial Z-axis acceleration sensor data; obtain a preset initial yaw angle of the terminal relative to the carrier; and determine the initial pitch angle, the initial roll angle, and the initial yaw angle as the initial attitude information.

In some embodiments, the first determining module 4553 is further configured to: determine, based on the initial pitch angle, a first rotation matrix corresponding to an X-axis, determine, based on the initial roll angle, a second rotation matrix corresponding to a Y-axis, and determine, based on the initial yaw angle, a third rotation matrix corresponding to a Z axis; and determine a product of the third rotation matrix, the second rotation matrix, and the first rotation matrix as the conversion matrix between the carrier coordinate system and the terminal coordinate system.

In some embodiments, the first determining module 4553 is further configured to: determine a transposed matrix of the conversion matrix, and determining an inverse matrix of the transposed matrix; determine each piece of second gyroscope data of the carrier based on the inverse matrix and each piece of first gyroscope data; obtain each piece of carrier yaw data from each piece of second gyroscope data, the carrier yaw data including each carrier timestamp and a carrier yaw angle corresponding to each carrier timestamp; and determine the yaw angle variation information of the carrier based on each carrier timestamp and the carrier yaw angle corresponding to each carrier timestamp.

In some embodiments, the first fusion module 4554 is further configured to: obtain start time and end time of the fusion, determine a target satellite positioning sequence based on the start time, the end time, and the satellite positioning information, and determine a target yaw angle variation sequence based on the start time, the end time, and the yaw angle variation information; determine first target trajectory point data based on first target satellite positioning data and second target satellite positioning data in the target satellite positioning sequence and first target yaw angle variation data in the target yaw angle variation sequence; determine $j^{th}$ target satellite positioning data and $(j+1)^{th}$ target satellite positioning data that correspond to $i^{th}$ target yaw angle variation data in the target yaw angle variation sequence, an $i^{th}$ carrier timestamp corresponding to the $i^{th}$ target yaw angle variation data being between a $j^{th}$ satellite timestamp corresponding to the $j^{th}$ target satellite positioning data and a $(j+1)^{th}$ satellite timestamp corresponding to the $(j+1)^{th}$ target satellite positioning data, i=2, 3, ..., N, N being a total quantity of yaw angle variations in the target yaw angle variation sequence, and j being an integer less than or equal to i; determine offset information between an $i^{th}$ target trajectory point and an $(i-1)^{th}$ target trajectory point based on the $j^{th}$ target satellite positioning data and the $(j+1)^{th}$ target satellite positioning data in the target satellite positioning sequence and the $i^{th}$ target yaw angle variation data in the target yaw angle variation sequence; and determine $i^{th}$ target trajectory point data based on $(i-1)^{th}$ target trajectory point data and the offset information.

In some embodiments, the first fusion module 4554 is further configured to: obtain a first satellite timestamp from the first target satellite positioning data, obtain a second satellite timestamp from the second target satellite positioning data, and obtain a first carrier timestamp from the first target yaw angle variation data; when the first carrier timestamp is between the first satellite timestamp and the second satellite timestamp, determine a first fusion ratio based on the first satellite timestamp, the second satellite timestamp, and the first carrier timestamp; and fuse the first target satellite positioning data and the second target satellite positioning data based on the first fusion ratio to obtain the first target trajectory point data.

In some embodiments, the first fusion module 4554 is further configured to: fuse first position information in the first target satellite positioning data and second position information in the second target satellite positioning data based on the first fusion ratio to obtain position information of a first target trajectory point; fuse a first rate in the first target satellite positioning data and a second rate in the second target satellite positioning data based on the first fusion ratio to obtain a target rate of the first target trajectory point; obtain first direction information from the first target satellite positioning data, and obtain second direction information from the second target satellite positioning data; determine first direction difference information based on the first direction information, the second direction information, and the first fusion ratio; and determine velocity direction information of the first target trajectory point based on the second direction information and the first direction difference information.

In some embodiments, the first fusion module 4554 is further configured to: obtain the $i^{th}$ carrier timestamp from the $i^{th}$ target yaw angle variation data, and determine an $i^{th}$ time difference based on the $i^{th}$ carrier timestamp and an $(i-1)^{th}$ carrier timestamp; obtain the $j^{th}$ satellite timestamp from the $j^{th}$ target satellite positioning data, and obtain the $(j+1)^{th}$ satellite timestamp from the $(j+1)^{th}$ target satellite positioning data; determine an $i^{th}$ fusion ratio based on the $j^{th}$ satellite timestamp, the $(j+1)^{th}$ satellite timestamp, and the $i^{th}$ carrier timestamp; fuse a $j^{th}$ rate in the $j^{th}$ target satellite positioning data and a $(j+1)^{th}$ rate in the $(j+1)^{th}$ target satellite positioning data based on the $i^{th}$ fusion ratio to obtain an $i^{th}$ average rate; determine an $i^{th}$ offset distance based on the $i^{th}$ time difference and the $i^{th}$ average rate; and determine an $i^{th}$ velocity direction based on an $(i-1)^{th}$ velocity direction of the $(i-1)^{th}$ target trajectory point and an $i^{th}$ yaw angle variation angle in the $i^{th}$ target yaw angle variation data.

In some embodiments, the first fusion module 4554 is further configured to: determine candidate position information of the $i^{th}$ target trajectory point based on position information of the $(i-1)^{th}$ target trajectory point and the $i^{th}$ offset distance; determine the candidate position information of the $i^{th}$ target trajectory point, the $i^{th}$ average rate, and the $i^{th}$ velocity direction as $i^{th}$ candidate trajectory point data; and when it is determined that no error filtering fusion needs to be performed, determine the $i^{th}$ candidate trajectory point data as the $i^{th}$ target trajectory point data.

In some embodiments, the first fusion module 4554 is further configured to: when it is determined that error filtering fusion needs to be performed, determine a sensor error based on the first i-1 pieces of target trajectory point data and the candidate position information; obtain a satellite accuracy estimate in the $j^{th}$ target satellite positioning data; obtain an $(i-1)^{th}$ reference error, and determine an $i^{th}$ error based on the sensor error and the $(i-1)^{th}$ reference error; determine an $i^{th}$ error fusion ratio based on the $i^{th}$ error and the satellite accuracy estimate; and fuse the $j^{th}$ target satellite positioning data and the $i^{th}$ candidate trajectory point data based on the $i^{th}$ error fusion ratio to obtain the $i^{th}$ target trajectory point data.

In some embodiments, the first fusion module 4554 is further configured to: determine an error sum of the $i^{th}$ error and the satellite accuracy estimate; and determine a quotient of the satellite accuracy estimate and the error sum as the $i^{th}$ error fusion ratio.

In some embodiments, the first fusion module 4554 is further configured to: obtain $j^{th}$ position information, $j^{th}$ direction information, and the $j^{th}$ rate in the $j^{th}$ target satellite positioning data, and obtain the candidate position information, the $i^{th}$ velocity direction, and the $i^{th}$ average rate in the $i^{th}$ candidate trajectory point data; determine a position difference between the candidate position information and the $j^{th}$ position information, determine a direction difference between the $i^{th}$ velocity direction and a $j^{th}$ direction, and determine a rate difference between the $i^{th}$ average rate and the $j^{th}$ rate; determine a sum of the $j^{th}$ position information and a product of the position difference and the $i^{th}$ error fusion ratio as target position information of the $i^{th}$ target trajectory point; determine a sum of the $j^{th}$ direction information and a product of the direction difference and the $i^{th}$ error fusion ratio as target direction information of the $i^{th}$ target trajectory point; and determine a sum of the $j^{th}$ rate and a product of the rate difference and the $i^{th}$ error fusion ratio as a target rate of the $i^{th}$ target trajectory point.

In some embodiments, the apparatus further includes: a second determining module, configured to determine a trajectory error between the moving trajectory information of the carrier and the target satellite positioning sequence; a third determining module, configured to: when it is determined that the trajectory error is greater than a preset error threshold or an accuracy estimate of the target satellite positioning sequence is less than a preset accuracy threshold, determine an actual moving trajectory of the carrier based on the moving trajectory information of the carrier; and a display module, configured to display the actual moving trajectory of the carrier, and display a path planning result obtained through path planning based on the moving trajectory information of the carrier.

The descriptions of the data processing apparatus embodiment are similar to those of the foregoing methods, and the data processing apparatus embodiment has same beneficial effects as those of the method embodiments. For technical details not disclosed in the data processing apparatus embodiment of this application, a person skilled in the art can refer to the descriptions of the method embodiments of this application for understanding.

Embodiments of this application provide a computer program product. The computer program product includes a computer program or computer-executable instructions. The computer program or the computer-executable instructions are stored in a computer-readable storage medium. A processor of an electronic device reads the computer-executable instructions from the computer-readable storage medium, and the processor executes the computer-executable instructions, so that the electronic device performs the data processing method in embodiments of this application.

Embodiments of this application provide a computer-readable storage medium storing computer-executable instructions. When the computer-executable instructions are executed by a processor, the processor is enabled to perform the data processing method provided in embodiments of this application, for example, the data processing method shown in FIG. 3A and FIG. 5B.

In some embodiments, the computer-readable storage medium may be a memory such as an FRAM, a ROM, a PROM, an EPROM, an EEPROM, a flash memory, a magnetic memory, a compact disc, or a CD-ROM; or may be various devices including one of or any combination of the foregoing memories.

In some embodiments, the computer-executable instructions may be written in the form of a program, software, a software module, a script, or code according to a programming language in any form (including a compiled or interpretive language, or a declarative or procedural language), and may be deployed in any form, including being deployed as a standalone program, or being deployed as a module, a component, a subroutine, or another unit suitable for use in a computing environment.

In an example, the computer-executable instructions may, but not necessarily, correspond to a file in a file system, and may be stored as a part of a file that stores other programs or data, for example, stored in one or more scripts of a Hypertext Markup Language (HTML) document, stored in a single file dedicated for the discussed program, or stored in a plurality of co-files (for example, files that store one or more modules, subroutines, or code parts).

In an example, the executable instructions may be deployed on one electronic device for execution, or may be executed on a plurality of electronic devices at one location, or may be executed on a plurality of electronic devices that are distributed at a plurality of locations and that are interconnected through a communication network.

The foregoing descriptions are merely embodiments of this application and are not intended to limit the protection scope of this application. Any modification, equivalent replacement, or improvement made without departing from the spirit and scope of this application shall fall within the protection scope of this application.

**Claims**

1. A data processing method, executable by an electronic device, the method comprising:

   obtaining satellite-based positioning information;
   obtaining a sensor data set captured by a target sensor in a terminal, the sensor data set comprising at least an acceleration sensor data set and a gyroscope data set;
   determining, based on the acceleration sensor data set and the gyroscope data set, yaw angle variation information of a carrier in which the terminal is located during movement of the carrier; and
   fusing the satellite-based positioning information and the yaw angle variation information to obtain moving trajectory information of the carrier.

2. The method according to claim 1, wherein determining, based on the acceleration sensor data set and the gyroscope data set, the yaw angle variation information of the carrier in which the terminal is located comprises:

   obtaining initial acceleration sensor data of the terminal from the acceleration sensor data set;
   determining initial attitude information of the terminal relative to the carrier based on the initial acceleration sensor data;
   determining a conversion matrix between a carrier coordinate system and a terminal coordinate system based on the initial attitude information;
   obtaining each piece of first gyroscope data comprised in the gyroscope data set; and
   determining the yaw angle variation information of the carrier based on the conversion matrix and the each piece of first gyroscope data.

3. The method according to claim 2, wherein the initial acceleration sensor data comprises initial X-axis acceleration sensor data, initial Y-axis acceleration sensor data, and initial Z-axis acceleration sensor data, and wherein determining the initial attitude information of the terminal relative to the carrier based on the initial acceleration sensor data comprises:

   determining an initial pitch angle of the terminal relative to the carrier based on the initial X-axis acceleration sensor data, the initial Y-axis acceleration sensor data, and the initial Z-axis acceleration sensor data;
   determining an initial roll angle of the terminal relative to the carrier based on the initial X-axis acceleration sensor data and the initial Z-axis acceleration sensor data;
   obtaining a preset initial yaw angle of the terminal relative to the carrier; and
   determining the initial pitch angle, the initial roll angle, and the initial yaw angle as the initial attitude information.

4. The method according to claim 3, wherein determining the conversion matrix between the carrier coordinate system and the terminal coordinate system based on the initial attitude information comprises:

   determining, based on the initial pitch angle, a first rotation matrix corresponding to an X-axis, determining, based on the initial roll angle, a second rotation matrix corresponding to a Y-axis, and determining, based on the initial yaw angle, a third rotation matrix corresponding to a Z axis; and
   determining a product of the third rotation matrix, the second rotation matrix, and the first rotation matrix as the conversion matrix between the carrier coordinate system and the terminal coordinate system.

5. The method according to claim 2, wherein determining the yaw angle variation information of the carrier based on the conversion matrix and the each piece of first gyroscope data comprises:

   determining a transposed matrix of the conversion matrix, and determining an inverse matrix of the transposed matrix;
   determining each piece of second gyroscope data of the carrier based on the inverse matrix and the each piece of first gyroscope data;
   obtaining each piece of carrier yaw data from the each piece of second gyroscope data, the carrier yaw data comprising each carrier timestamp and a carrier yaw angle corresponding to the each carrier timestamp; and determining the yaw angle variation information of the carrier based on the each carrier timestamp and the carrier yaw angle corresponding to the each carrier timestamp.

6. The method according to any one of claims 1 to 5, wherein fusing the satellite-based positioning information and the yaw angle variation information to obtain the moving trajectory information of the carrier comprises:

obtaining start time and end time for fusing the satellite-based positioning information and the yaw angle variation information, determining a target satellite positioning sequence based on the start time, the end time, and the satellite-based positioning information, and determining a target yaw angle variation sequence based on the start time, the end time, and the yaw angle variation information;

determining first target trajectory point data based on first target satellite positioning data and second target satellite positioning data in the target satellite positioning sequence and first target yaw angle variation data in the target yaw angle variation sequence;

determining $j^{th}$ target satellite positioning data and $(j+1)^{th}$ target satellite positioning data that correspond to $i^{th}$ target yaw angle variation data in the target yaw angle variation sequence, an $i^{th}$ carrier timestamp corresponding to the $i^{th}$ target yaw angle variation data being between a $j^{th}$ satellite timestamp corresponding to the $j^{th}$ target satellite positioning data and a $(j+1)^{th}$ satellite timestamp corresponding to the $(j+1)^{th}$ target satellite positioning data, i=2, 3, ..., N, N being a total quantity of yaw angle variations in the target yaw angle variation sequence, and j being an integer less than or equal to i;

determining offset information between an $i^{th}$ target trajectory point and an $(i-1)^{th}$ target trajectory point based on the $j^{th}$ target satellite positioning data and the $(j+1)^{th}$ target satellite positioning data in the target satellite positioning sequence and the $i^{th}$ target yaw angle variation data in the target yaw angle variation sequence; and determining $i^{th}$ target trajectory point data based on $(i-1)^{th}$ target trajectory point data and the offset information.

7. The method according to claim 6, wherein determining the first target trajectory point data based on the first target satellite positioning data and the second target satellite positioning data in the target satellite positioning sequence and the first target yaw angle variation data in the target yaw angle variation sequence comprises:

obtaining a first satellite timestamp from the first target satellite positioning data, obtaining a second satellite timestamp from the second target satellite positioning data, and obtaining a first carrier timestamp from the first target yaw angle variation data;

when the first carrier timestamp is between the first satellite timestamp and the second satellite timestamp, determining a first fusion ratio based on the first satellite timestamp, the second satellite timestamp, and the first carrier timestamp; and

fusing the first target satellite positioning data and the second target satellite positioning data based on the first fusion ratio to obtain the first target trajectory point data.

8. The method according to claim 7, wherein fusing the first target satellite positioning data and the second target satellite positioning data based on the first fusion ratio to obtain the first target trajectory point data comprises:

fusing first position information in the first target satellite positioning data and second position information in the second target satellite positioning data based on the first fusion ratio to obtain position information of a first target trajectory point;

fusing a first rate in the first target satellite positioning data and a second rate in the second target satellite positioning data based on the first fusion ratio to obtain a target rate of the first target trajectory point;

obtaining first direction information from the first target satellite positioning data, and obtaining second direction information from the second target satellite positioning data;

determining first direction difference information based on the first direction information, the second direction information, and the first fusion ratio; and

determining velocity direction information of the first target trajectory point based on the second direction information and the first direction difference information.

9. The method according to claim 6, wherein determining the offset information between the $i^{th}$ target trajectory point and the $(i-1)^{th}$ target trajectory point based on the $j^{th}$ target satellite positioning data and the $(j+1)^{th}$ target satellite positioning data in the target satellite positioning sequence and the $i^{th}$ target yaw angle variation data in the target yaw angle variation sequence comprises:

obtaining the $i^{th}$ carrier timestamp from the $i^{th}$ target yaw angle variation data, and determining an $i^{th}$ time difference based on the $i^{th}$ carrier timestamp and an $(i-1)^{th}$ carrier timestamp;

obtaining the $j^{th}$ satellite timestamp from the $j^{th}$ target satellite positioning data, and obtaining the $(j+1)^{th}$ satellite timestamp from the $(j+1)^{th}$ target satellite positioning data;

determining an $i^{th}$ fusion ratio based on the $j^{th}$ satellite timestamp, the $(j+1)^{th}$ satellite timestamp, and the $i^{th}$ carrier timestamp;

fusing a $j^{th}$ rate in the $j^{th}$ target satellite positioning data and a $(j+1)^{th}$ rate in the $(j+1)^{th}$ target satellite positioning data based on the $i^{th}$ fusion ratio to obtain an $i^{th}$ average rate;

determining an $i^{th}$ offset distance based on the $i^{th}$ time difference and the $i^{th}$ average rate; and

determining an $i^{th}$ velocity direction based on an $(i-1)^{th}$ velocity direction of the $(i-1)^{th}$ target trajectory point and an $i^{th}$ yaw angle variation angle in the $i^{th}$ target yaw angle variation data.

10. The method according to claim 9, wherein determining $i^{th}$ target trajectory point data based on the $(i-1)^{th}$ target trajectory point data and the offset information comprises:

determining candidate position information of the $i^{th}$ target trajectory point based on position information of the $(i-1)^{th}$ target trajectory point and the $i^{th}$ offset distance;

determining the candidate position information of the $i^{th}$ target trajectory point, the $i^{th}$ average rate, and the $i^{th}$ velocity direction as $i^{th}$ candidate trajectory point data; and

when it is determined that no error filtering fusion needs to be performed, determining the $i^{th}$ candidate trajectory point data as the $i^{th}$ target trajectory point data.

11. The method according to claim 10, wherein determining the $i^{th}$ target trajectory point data based on the $(i-1)^{th}$ target trajectory point data and the offset information comprises:

when it is determined that error filtering fusion needs to be performed, determining a sensor error based on the first $i-1$ pieces of target trajectory point data and the candidate position information;

obtaining a satellite accuracy estimate in the $j^{th}$ target satellite positioning data;

obtaining an $(i-1)^{th}$ reference error, and determining an $i^{th}$ error based on the sensor error and the $(i-1)^{th}$ reference error;

determining an $i^{th}$ error fusion ratio based on the $i^{th}$ error and the satellite accuracy estimate; and

fusing the $j^{th}$ target satellite positioning data and the $i^{th}$ candidate trajectory point data based on the $i^{th}$ error fusion ratio to obtain the $i^{th}$ target trajectory point data.

12. The method according to claim 11, wherein determining the $i^{th}$ error fusion ratio based on the $i^{th}$ error and the satellite accuracy estimate comprises:

determining an error sum of the $i^{th}$ error and the satellite accuracy estimate; and

determining a quotient of the satellite accuracy estimate and the error sum as the $i^{th}$ error fusion ratio.

13. The method according to claim 11, wherein fusing the $j^{th}$ target satellite positioning data and the $i^{th}$ candidate trajectory point data based on the $i^{th}$ error fusion ratio to obtain the $i^{th}$ target trajectory point data comprises:

obtaining $j^{th}$ position information, $j^{th}$ direction information, and the $j^{th}$ rate in the $j^{th}$ target satellite positioning data, and obtaining the candidate position information, the $i^{th}$ velocity direction, and the $i^{th}$ average rate in the $i^{th}$ candidate trajectory point data;

determining a position difference between the candidate position information and the $j^{th}$ position information, determining a direction difference between the $i^{th}$ velocity direction and a $j^{th}$ direction, and determining a rate difference between the $i^{th}$ average rate and the $j^{th}$ rate;

determining a sum of the $j^{th}$ position information and a product of the position difference and the $i^{th}$ error fusion ratio as target position information of the $i^{th}$ target trajectory point;

determining a sum of the $j^{th}$ direction information and a product of the direction difference and the $i^{th}$ error fusion ratio as target direction information of the $i^{th}$ target trajectory point; and

determining a sum of the $j^{th}$ rate and a product of the rate difference and the $i^{th}$ error fusion ratio as a target rate of the $i^{th}$ target trajectory point.

14. The method according to claim 6, further comprising:

determining a trajectory error between the moving trajectory information of the carrier and the target satellite positioning sequence;

when it is determined that the trajectory error is greater than a preset error threshold or an accuracy estimate of the target satellite positioning sequence is less than a preset accuracy threshold, determining an actual moving trajectory of the carrier based on the moving trajectory information of the carrier; and

displaying the actual moving trajectory of the carrier, and displaying a path planning result obtained through path planning based on the moving trajectory information of the carrier.

15. A data processing apparatus, the apparatus comprising:

a first obtaining module, configured to obtain satellite-based positioning information;

a second obtaining module, configured to obtain a sensor data set captured by a target sensor in a terminal, the sensor data set comprising at least an acceleration sensor data set and a gyroscope data set;

a first determining module, configured to determine, based on the acceleration sensor data set and the gyroscope data set, yaw angle variation information of a carrier in which the terminal is located during movement of the carrier; and

a first fusion module, configured to fuse the satellite-based positioning information and the yaw angle variation information to obtain moving trajectory information of the carrier.

16. An electronic device, the electronic device comprising:

a memory, configured to store computer-executable instructions; and

a processor, configured to implement the method according to any one of claims 1 to 14 when executing the computer-executable instructions stored in the memory.

17. A computer-readable storage medium, having computer-executable instructions stored therein that, when executed by a processor, cause the processor to perform the method according to any one of claims 1 to 14.

18. A computer program product, comprising a computer program or computer-executable instructions that, when executed by a processor, causes the processor to perform the method according to any one of claims 1 to 14.

100

GNSS
200

Server 500

Perform path planning based on the moving trajectory information

Satellite positioning information

Moving trajectory information

Path planning result

Carrier 300

Terminal 400

Determine, based on a sensor data set, yaw angle variation information of the carrier during movement, and fuse the satellite positioning information and the yaw angle variation information to obtain moving trajectory information

FIG. 1

Terminal 400

Memory 450

| Operating system 451 |
| Network communication module 452 |
| Display module 453 |
| Input processing module 454 |
| Data processing apparatus 455 |

Network interface 420

Processor 410

440

User interface 430

Output apparatus 431

Input apparatus 432

First obtaining module 4551

Second obtaining module 4552

First determining module 4553

First fusion module 4554

FIG. 2

Obtain satellite positioning information — 101

Obtain a sensor data set captured by a target sensor in a terminal — 102

Determine, based on an acceleration sensor data set and a gyroscope data set, yaw angle variation information of a carrier in which the terminal is located during movement of the carrier — 103

Fuse the satellite positioning information and the yaw angle variation information to obtain moving trajectory information of the carrier — 104

FIG. 3A

Determine, based on an acceleration sensor data set and a gyroscope data set, yaw angle variation information of a carrier in which a terminal is located during movement ⟋ 103

Obtain initial acceleration sensor data of the terminal from the acceleration sensor data set ⟋ 1031

Determine initial attitude information of the terminal relative to the carrier based on the initial acceleration sensor data ⟋ 1032

Determine a conversion matrix between a carrier coordinate system and a terminal coordinate system based on the initial attitude information ⟋ 1033

Obtain each piece of gyroscope data in the gyroscope data set ⟋ 1034

Determine the yaw angle variation information of the carrier based on the conversion matrix and each piece of gyroscope data ⟋ 1035

FIG. 3B

Determine yaw angle variation information of a carrier based on a conversion matrix and each piece of gyroscope data ⟋ 1035

Determine a transposed matrix of the conversion matrix, and determine an inverse matrix of the transposed matrix ⟋ 351

Determine each piece of second gyroscope data of the carrier based on the inverse matrix and each piece of first gyroscope data ⟋ 352

Obtain each piece of carrier yaw data from each piece of second gyroscope data ⟋ 353

Determine the yaw angle variation information of the carrier based on each carrier timestamp and a carrier yaw angle corresponding to each carrier timestamp ⟋ 354

FIG. 3C

Fuse satellite positioning information and yaw angle variation information to obtain moving trajectory information of a carrier — 104

Obtain start time and end time of the fusion, determine a target yaw angle variation sequence based on the start time, the end time, and the yaw angle variation information, and determine a target satellite positioning sequence based on the target yaw angle variation sequence and the satellite positioning information — 1041

Determine first target trajectory point data based on first target satellite positioning data and second target satellite positioning data in the target satellite positioning sequence and first target yaw angle variation data in the target yaw angle variation sequence — 1042

Determine $j^{th}$ target satellite positioning data and $(j+1)^{th}$ target satellite positioning data that correspond to $i^{th}$ target yaw angle variation data in the target yaw angle variation sequence — 1043

Determine offset information between an $i^{th}$ target trajectory point and an $(i-1)^{th}$ target trajectory point based on the $j^{th}$ target satellite positioning data and the $(j+1)^{th}$ target satellite positioning data in the target satellite positioning sequence and the $i^{th}$ target yaw angle variation data in the target yaw angle variation sequence — 1044

Determine $i^{th}$ target trajectory point data based on $(i-1)^{th}$ target trajectory point data and the offset information — 1045

FIG. 4A

Determine first target trajectory point data based on first target satellite positioning data and second target satellite positioning data in a target satellite positioning sequence and first target yaw angle variation data in a target yaw angle variation sequence ⟶ 1042

Obtain a first satellite timestamp from the first target satellite positioning data, obtain a second satellite timestamp from the second target satellite positioning data, and obtain a first carrier timestamp from the first target yaw angle variation data ⟶ 421

When the first carrier timestamp is between the first satellite timestamp and the second satellite timestamp, determine a first fusion ratio based on the first satellite timestamp, the second satellite timestamp, and the first carrier timestamp ⟶ 422

Fuse the first target satellite positioning data and the second target satellite positioning data based on the first fusion ratio to obtain the first target trajectory point data ⟶ 423

# FIG. 4B

Determine offset information between an $i^{th}$ target trajectory point and an $(i-1)^{th}$ target trajectory point based on $j^{th}$ target satellite positioning data and $(j+1)^{th}$ target satellite positioning data in a target satellite positioning sequence and $i^{th}$ target yaw angle variation data in a target yaw angle variation sequence — 1044

Obtain an $i^{th}$ carrier timestamp from the $i^{th}$ target yaw angle variation data, and determine an $i^{th}$ time difference based on the $i^{th}$ carrier timestamp and an $(i-1)^{th}$ carrier timestamp — 441

Obtain a $j^{th}$ satellite timestamp from the $j^{th}$ target satellite positioning data, and obtain a $(j+1)^{th}$ satellite timestamp from the $(j+1)^{th}$ target satellite positioning data — 442

Determine an $i^{th}$ fusion ratio based on the $j^{th}$ satellite timestamp, the $(j+1)^{th}$ satellite timestamp, and the $i^{th}$ carrier timestamp — 443

Fuse a $j^{th}$ rate in the $j^{th}$ target satellite positioning data and a $(j+1)^{th}$ rate in the $(j+1)^{th}$ target satellite positioning data based on the $i^{th}$ fusion ratio to obtain an $i^{th}$ average rate — 444

Determine an $i^{th}$ offset distance based on the $i^{th}$ time difference and the $i^{th}$ average rate — 445

Determine an $i^{th}$ velocity direction based on an $(i-1)^{th}$ velocity direction of the $(i-1)^{th}$ target trajectory point and an $i^{th}$ yaw angle variation angle in the $i^{th}$ target yaw angle variation data — 446

FIG. 4C

Determine $i^{th}$ target trajectory point data based on $(i-1)^{th}$ target trajectory point data and offset information ⟋ 1045

Determine candidate position information of an $i^{th}$ target trajectory point based on position information of an $(i-1)^{th}$ target trajectory point, an $i^{th}$ offset distance, and an $i^{th}$ velocity direction ⟋ 51

Determine the candidate position information of the $i^{th}$ target trajectory point, an $i^{th}$ average rate, and the $i^{th}$ velocity direction as $i^{th}$ candidate trajectory point data ⟋ 52

Yes

Determine whether error filtering fusion needs to be performed ⟋ 53

No

Determine the $i^{th}$ candidate trajectory point data as the $i^{th}$ target trajectory point data ⟋ 54

Determine a sensor error based on the first $i-1$ pieces of target trajectory point data and the candidate position information ⟋ 55

Obtain a satellite accuracy estimate in $j^{th}$ target satellite positioning data ⟋ 56

Obtain an $(i-1)^{th}$ reference error, and determine an $i^{th}$ error based on the sensor error and the $(i-1)^{th}$ reference error ⟋ 57

Determine an $i^{th}$ error fusion ratio based on the $i^{th}$ error and the satellite accuracy estimate ⟋ 58

Fuse the $j^{th}$ target satellite positioning data and the $i^{th}$ candidate trajectory point data based on the $i^{th}$ error fusion ratio to obtain the $i^{th}$ target trajectory point data ⟋ 59

FIG. 5A

| Obtain satellite positioning information | ⟋ 101 |

↓

| Obtain a sensor data set captured by a target sensor in a terminal | ⟋ 102 |

↓

| Determine, based on an acceleration sensor data set and a gyroscope data set, yaw angle variation information of a carrier in which the terminal is located during movement of the carrier | ⟋ 103 |

↓

| Fuse the satellite positioning information and the yaw angle variation information to obtain moving trajectory information of the carrier | ⟋ 104 |

↓

| Determine a trajectory error between the moving trajectory information of the carrier and a target satellite positioning sequence | ⟋ 105 |

↓

| When it is determined that the trajectory error is greater than a preset error threshold or an accuracy estimate of the target satellite positioning sequence is less than a preset accuracy threshold, determine an actual moving trajectory of the carrier based on the moving trajectory information of the carrier | ⟋ 106 |

↓

| Display the actual moving trajectory of the carrier, and display a path planning result obtained through path planning based on the moving trajectory information of the carrier | ⟋ 107 |

## FIG. 5B

| GNSS positioning module 601 | | MEMS module 603 |

Satellite positioning information ↓      Sensor information ↓

| Accuracy estimation module 602 | | AHRS estimation module 604 |

Circular error probable ↓      Carrier attitude estimation information ↓

| Fusion trajectory module 605 |

## FIG. 6

Yaw angle 701

z

Pitch angle 702

x

y

Roll angle 703

**FIG. 7**

x

$a_x$

$a_y$

y

$a_z$

g

z

**FIG. 8**

901    902

East Fourth
Ring Road

East Fourth
Ring Road

## FIG. 9

1002    1001

## FIG. 10

## INTERNATIONAL SEARCH REPORT

| | |
|---|---|
| | International application No. |
| | **PCT/CN2023/129424** |

### A. CLASSIFICATION OF SUBJECT MATTER

G01S 19/49(2010.01)i; G01C 21/16(2006.01)i

According to International Patent Classification (IPC) or to both national classification and IPC

### B. FIELDS SEARCHED

Minimum documentation searched (classification system followed by classification symbols)

IPC: G01S, G01C

Documentation searched other than minimum documentation to the extent that such documents are included in the fields searched

Electronic data base consulted during the international search (name of data base and, where practicable, search terms used)

CNTXT, ENTXTC, WPABSC, VEN: 腾讯科技, 卫星, GPS, 北斗, 定位, 车, 载体, 加速度, 陀螺仪, 偏航角, 航向角, 变化, 融合, 轨迹, satellite, positioning, localization, vehicle, car, acceleration, gyroscope, yaw, heading, angle, variation, fusion, trajectory

### C. DOCUMENTS CONSIDERED TO BE RELEVANT

| Category* | Citation of document, with indication, where appropriate, of the relevant passages | Relevant to claim No. |
|---|---|---|
| PX | CN 116953760 A (TENCENT TECHNOLOGY (SHENZHEN) CO., LTD.) 27 October 2023 (2023-10-27) description, paragraphs [0045]-[0348], and figures 1-10 | 1-18 |
| Y | CN 112130188 A (MOGU VEHICLE-LINK INFORMATION TECHNOLOGY CO., LTD.) 25 December 2020 (2020-12-25) description, paragraphs [0026]-[0039], [0083]-[0105] and [0152]-[0153], and figures 1 and 4-5 | 1-5, 15-18 |
| Y | CN 112859139 A (CHINA MOBILE IOT CO., LTD. et al.) 28 May 2021 (2021-05-28) description, paragraph [0041] | 1-5, 15-18 |
| A | CN 101907714 A (TAO YANG) 08 December 2010 (2010-12-08) entire document | 1-18 |
| A | CN 112415554 A (GUANGDONG OPPO MOBILE TELECOMMUNICATIONS CORP., LTD.) 26 February 2021 (2021-02-26) entire document | 1-18 |
| A | US 2008269988 A1 (FELLER, Walter J. et al.) 30 October 2008 (2008-10-30) entire document | 1-18 |

☐ Further documents are listed in the continuation of Box C.　　☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **06 December 2023** | **13 December 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/129424**

| Patent document cited in search report | | | Publication date (day/month/year) | Patent family member(s) | | | Publication date (day/month/year) |
|---|---|---|---|---|---|---|---|
| CN | 116953760 | A | 27 October 2023 | None | | | |
| CN | 112130188 | A | 25 December 2020 | None | | | |
| CN | 112859139 | A | 28 May 2021 | None | | | |
| CN | 101907714 | A | 08 December 2010 | None | | | |
| CN | 112415554 | A | 26 February 2021 | None | | | |
| US | 2008269988 | A1 | 30 October 2008 | BRPI | 0915864 | A2 | 10 November 2015 |
| | | | | BRPI | 0915864 | B1 | 10 September 2019 |
| | | | | US | 8265826 | B2 | 11 September 2012 |
| | | | | AU | 2009268726 | A1 | 14 January 2010 |
| | | | | AU | 2009268726 | B2 | 21 November 2013 |
| | | | | CA | 2730403 | A1 | 14 January 2010 |
| | | | | CA | 2730403 | C | 17 February 2015 |
| | | | | WO | 2010005945 | A1 | 14 January 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211677820